# EUROPEAN PATENT SPECIFICATION

(11) **EP 1 376 930 B1**
(45) Date of publication and mention of the grant of the patent: **23.04.2008**
(21) Application number: 03011941.6
(22) Date of filing: 27.05.2003
(51) Int. Cl.: H04L 12/24, H04Q 7/32, H04L 29/06

(54) **Systems and methods for application delivery and configuration management of mobile devices**
Systeme und Verfahren zur Lieferung von Anwendungen und zur Konfigurationsverwaltung für mobile Geräte
Systèmes et méthodes pour l'envoi d'applications et la gestion de la configuration de dispositifs mobiles

(30) Priority: 28.06.2002 US 187312
(43) Date of publication of application: 02.01.2004
(73) Proprietor: MICROSOFT CORPORATION, Redmond, Washington 98052-6399 (US)
(72) Inventor: Merrill, John Wickens Lamb, Redmond, Washington 98052 (US); Lantz, Eric Lawrence Albert, Sammamish, Washington 98074 (US); Esparragoza, Luis E., Snohomish, Washington 98296 (US); Truffat, Marcelo, Seattle, Washington 98107 (US); Marl, Dennis Craig, Seattle, Washington 98122 (US); Wilson, Russell Todd, Redmond, Washington 98052 (US); Padmanabhan, Udiyan Ilanjeran, Redmond, Washington 98052 (US)
(74) Representative: Grünecker, Kinkeldey, Stockmair & Schwanhäusser Anwaltssozietät

(56) References cited:
- WO-A-01/33867
- WO-A-02/13464
- WO-A-02/44892
- US-A- 6 049 671
- US-A1- 2002 019 237
- US-B1- 6 378 069
- JOHNSON D: "CONVERTING PC GUIS FOR NON PC DEVICES" CIRCUIT CELLUR INK, VERNON, CT, US, vol. 91, February 1998 (1998-02), pages 40-42,44-45, XP000852859 ISSN: 0896-8985

## Description

This invention relates configuration management systems, and in particular to the use of such systems to deliver applications for remote configuration of mobile devices.

Computers have become an integral part of the workplace. In many organizations, nearly every employee uses at least one computer. As a result, large businesses typically operate and maintain a very large number of computers. In businesses such as these, it becomes important to automate maintenance chores to any extent that is possible.

Fortunately, local area networks (LANs) and wide area networks (WANs) have also become common, allowing an organization's various computers to take advantage of centrally provided computer services such as user authentication, file-sharing, email, and various other types of services.

Configuration management systems represent one type of service that can be effectively used in a networked environment to automate the maintenance and management of various disparate computers within an organization. Such a service provides tools for centralized software distribution, asset management, and remote troubleshooting with respect to desktop computers, servers, and server applications. Microsoft Corporation's "Systems Management Server" is an example of a system designed for this purpose.

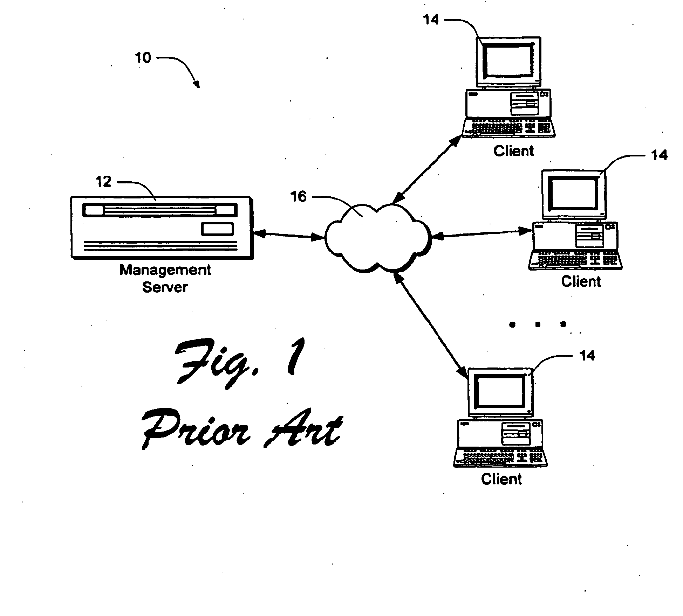

Fig. 1, shows a simplified example of computer system 10 in which automated configuration management is implemented. Such a system includes a management server 12 and a plurality of client computers 14. The clients 14 can communicate with each other and with management server 12 through a local-area network or wide area network 16.

Although it is represented as a single device in Fig. 1, management server 12 might comprise a plurality of individual computers or servers, which might be located in close proximity to each other or might be located at various different locations.

Modern operating systems and application software often provide client-side support for automated configuration management of computers on which the operating systems and application software reside. For example, the Microsoft Windows XP® family of operating systems maintains detailed inventories of both hardware and software components in a database that allows for programmatic query and data collation, both from components within the computer itself and from other computers. Within the Windows® environment, this feature is known as Windows Management Instrumentation or WMI. Change and configuration management software can utilize WMI information to obtain inventories of individual computers and to evaluate whether a computer's configuration should be updated or changed.

In addition to operating system support, individual client computers 14 are typically configured with special-purpose software to support automated configuration management. Such software is normally designed as part of a particular vendor's implementation of an automated configuration management system, for example as part of the Microsoft® Systems Management Server product. The special-purpose software works in conjunction with the client computer's operating system to perform various functions in conjunction with management server 12. Thus, the overall framework of an automated configuration management system includes both server components and client components.

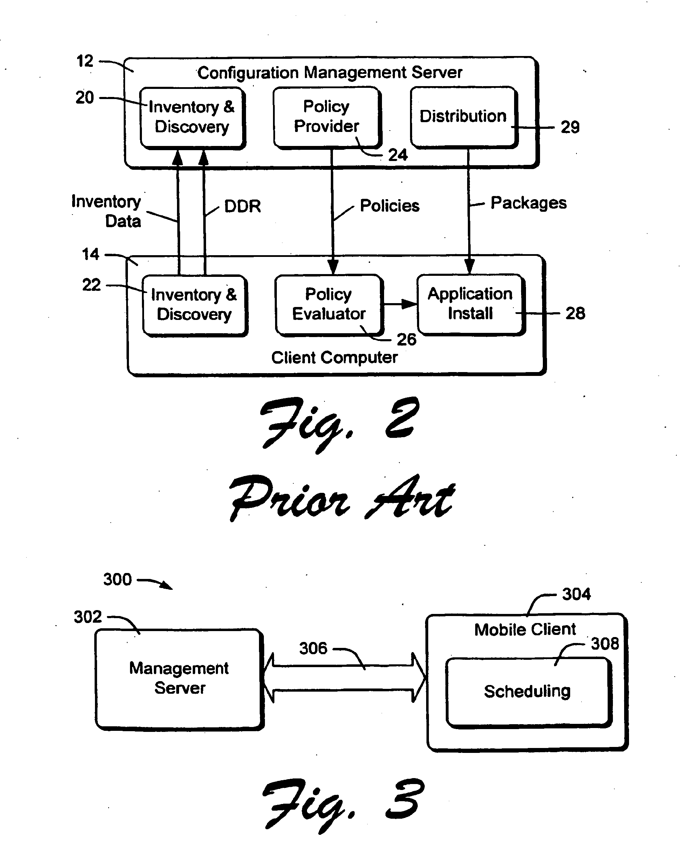

Fig. 2 shows simplified logical components of the configuration management framework implemented by the Microsoft® Systems Management Server product, including components of server 12 and components implemented within client 14. The illustrated components relate to the inventory and software distribution features of the framework.

Management server 12 has a server inventory and discovery component 20 that operates in conjunction with a client inventory and discovery component 22 residing on client 14. The client inventory and discovery component 22 gathers identification information and hardware and software inventories of client computer 14, assembles this information into data structures, and provides this information to server inventory and discovery component 20 of server 12. The identification information is packaged and reported as data structures referred to as discovery data records or DDRs. The management server maintains this information in a database to facilitate asset management functions. Within client 14, much of the information is gathered using the WMI functionality of the Windows XP® operating system. Communications between server 12 and client 14 utilize predetermined protocols that are proprietary to the particular implementation of the automated configuration management system.

Client computers potentially collect and report over 200 properties, including details such as:
- Number of disk drives
- Type of processor
- Amount of memory
- Operating system
- Monitor and display settings
- Computer name and IP address
- Information about connected peripherals
- Network type
- Bios information

In addition, each client computer reports a list of all software applications installed on the client, including manufacturer and version information.

Management server 12 includes a policy pusher 24 that pushes or automatically distributes policies, also referred to as advertisements, to managed computers such as client 14. Policies indicate software packages that are available for download and installation, and also include information indicating which types of client should download and install the indicated software packages. A software package is a collection of files, along with instructions for downloading and installing the files.

Client 14 has a policy evaluator 26 that receives the policies from server 12 and evaluates those policies to determine which are targeted to client 14. When policy evaluator 26 determines that a policy is directed to client 14, the policy evaluator passes this information to an application installation component 28 on client 14. Installation component 28 examines the policy information and determines how to download the associated software package. It then connects to a distribution point 29 associated with server 12 and downloads the software package. After downloading the package, the application installation component 28 installs the packaged software in accordance with the information contained on the downloaded software package.

Existing automated configuration management systems such as the Microsoft® System Management Server work well in the traditional networked environment shown in Fig. 1, where the managed computers comprise desktop or other computers that are substantially permanently connected over a high-bandwidth network connection to the management server. However, there is a growing trend for individual employees within an organization to utilize portable computing devices that are not engaged in persistent high-bandwidth connections to a management server, instead they are typically casually or intermittently connected to the management server over what are generally slow and often unreliable communication paths.

Additionally, such portable or mobile computing devices are typically of more limited functionality than conventional desktop computers. Specifically, handheld devices known as personal digital assistants (PDAs) and pocket personal computers (PPCs) are becoming very widely used, and their users often connect such devices to corporate networks for tasks such as viewing email or synchronizing contact lists. Network connection can be through an associated desktop computer, or might be though independent network connection, including wireless and/or remote means of access.

Although many organizations do not officially provide technical support for handheld devices such as PDAs, their help desks are receiving an increasing number of support calls relating to these devices. Such calls often relate to configuring the handheld devices and to obtaining new updates of applications that are installed on the devices.

There are many environments where computer or computer-like devices having less than full desktop functionality (i.e., limited memory and/or processing resources) are used in large numbers. Factory automation controllers, electronic point of sale terminals, gas station pumps, etc., are examples of commonly used devices that are frequently networked, but do not possess the full functionality and resources of a traditional desktop computer. Microsoft® Corporation has designed a special version of its Windows® operating system for such limited-resource devices, know as the Windows CE® operating system.

In the past, intermittently connected and limited resource mobile devices such as PDAs and the other examples mentioned above have not been able to participate in automated configuration management. One of the biggest impediments to corporate adoption of mobile devices and corresponding technology is the dearth of management options for configuring such devices. Existing mobile device configuration options are substantially limited with respect to support costs, an extensive amount of user intervention that is typically needed to implement such management options, and undesired security exposures (e.g., a man-in-the-middle attack (MITM))..

For instance, one existing solution requires that a mobile device be "docked" to a desktop computer that runs a configuration application to place files and settings onto the docked device. A docked device is typically placed into a cradle or otherwise connected to its host computer. Another known technique requires a user to navigate a corporate network or the Internet via the mobile device to find a download site and tap on a file download hyperlink. The user will be prompted for the desired storage location on the device and can proceed with installing the application. Yet another existing configuration technique to configure mobile devices is to distribute applications and/or data on a Compact Flash (CF) memory card that can be plugged into the device. The CF card may even automatically start an installation script.

Each of these methods has its particular advantages, but all require extensive user interaction and they do not offer a simple way of keeping a device that is intermittently connected (e.g., to a corporate network) updated over time. Rather, they only provide a one-time configuration opportunity. Making this situation even more difficult is that mobile devices are often connected over substantially slow communication channels (e.g., <9600 baud), causing any application and data updates to take a substantially long time to complete.

With respect to undesired security exposure (e.g., a MITM attack), consider that conventional mobile device configuration technology does not typically protect a mobile or remote device (i.e., a device not protected by a corporate firewall) from security breaches wherein a malicious user intercepts, and possibly alters, data traveling along a network. This means that data exchanges between a client and a particular host server can be compromised when another computing device fools both the client and the server into believing that they are communicating directly with one another when, in fact, an attacker is actually intercepting all network traffic between the two entities.
WO 02/44892 discloses a method and system for maintaining and distributing wireless applications. The system administrator may send a subscriber a notification that an update version is available for one of the applications already downloaded by the subscriber. In addition, the system administrators can choose to remotely activate or deactivate download applications over the wireless network. Instrumented applications can be forced to check with the host server to see if a new version of the application is available and can prompt the subscriber to determine whether to download the new version of the application. The system administrators revoke or restrict the privilege of a subscriber to execute an application. A subscriber can also use the personalization website 803 to obtain and change account information and a history of download or account activities. Through the personalization website 803, the system administrators can notify subscribers of the availability of updated or new applications.
US 2002/019237 A1 (USKELA SAMI) 14 February 2002 discloses a concept of managing service components of mobile terminals where, according to a first embodiment, the network receives a component list A from the mobile terminal and further receives a component list 8 from the home location register HLR containing components required by the mobile terminal. Thereafter, both lists are compared and a loading list comprising the missing services and components is created and transmitted to the mobile terminal. Before sending the component list A to the network, the mobile terminal transmits a time stamp A to the terminal. The terminal determines whether the time stamp is out of date by comparing it against a current time stamp B from the service provider. If the time stamp A is not the latest version, the mobile terminal is requested to transmit the component list A to the network. According to a second embodiment, the mobile terminal receives the component list B and compares it against its own component list A in order to request the missing components.
US-A-6 049 671 (MICROSOFT CORPORATION) 11 April 2000 discloses a method for identifying and obtaining computer software from a network computer, wherein an inventory of computer software on the user computer is sent to an update service, which is compared to a database entry, and information about computer services available is sent back to the computer.
It is the object of the present invention to provide a method and corresponding computer-readable media and system management framework for performing configuration management at a mobile device of user-selectable downloads and installations improving in particularly the process of requesting and provisioning of available and user selected data to the mobile device.
This object is solved by the subject matter of the independent claims.
Preferred embodiments are defined in the dependent claims.

A system management framework is described for application delivery and configuration management of mobile devices. The framework includes a management server and a mobile computing device. The management server is configured to communicate download instructions for purposes of configuration management of mobile computing devices. The mobile computing device is configured to connect to the management server over a non-persistent connection. The mobile computing device requests download instructions from the management server to determine any offerings that may be available for download and installation by the mobile computing device. Any offerings presented by the management server represent one or more files that have been made available since a last successful download operation conducted by the mobile computing device. The mobile computing device allows a user to accept or reject download and installation of any one or more of the offerings.

In one implementation, the mobile device is preconfigured to request download instructions from a specific management server source. Authenticating information (e.g., one or more digital certificates) corresponding to the specific source are maintained by the mobile device in a trusted source list. Subsequent to requesting and receiving download instructions from the specific source, the mobile device authenticates the received instructions via the trusted source list. Upon successful verification, the instructions are used to request and receive one or more offerings from at least one location specified by the verified instructions. The received offering(s) is/are further checked for authenticity, for example, via one or more security has functions. In this manner, the system management framework provides a multiple signature system that substantially eliminates undesired security exposure when the mobile device is operating beyond the protection of a corporate firewall.

Fig. 1 is a diagram of a prior art system management framework.

Fig. 2 is a block diagram showing logical components of a configuration management server and a client computer as used in a prior art system management framework such as the one shown in Fig. 1.

Fig. 3 is a block diagram of a system management framework in accordance with an embodiment of the invention.

Fig. 4 is a block diagram showing logical components of a configuration management server and a mobile client computer, as used in a system such as the one shown in Fig. 3.

Figs. 5 and 6 are block diagrams showing methodological aspects of application delivery and remote configuration of mobile devices of system management framework of Figs. 3 and 4.

Figs. 7-10 show respective aspects of an exemplary user interface presented by a client computing device such as mobile client to perform application delivery and configuration of the computing device in a system management framework of Figs. 3 and 4.

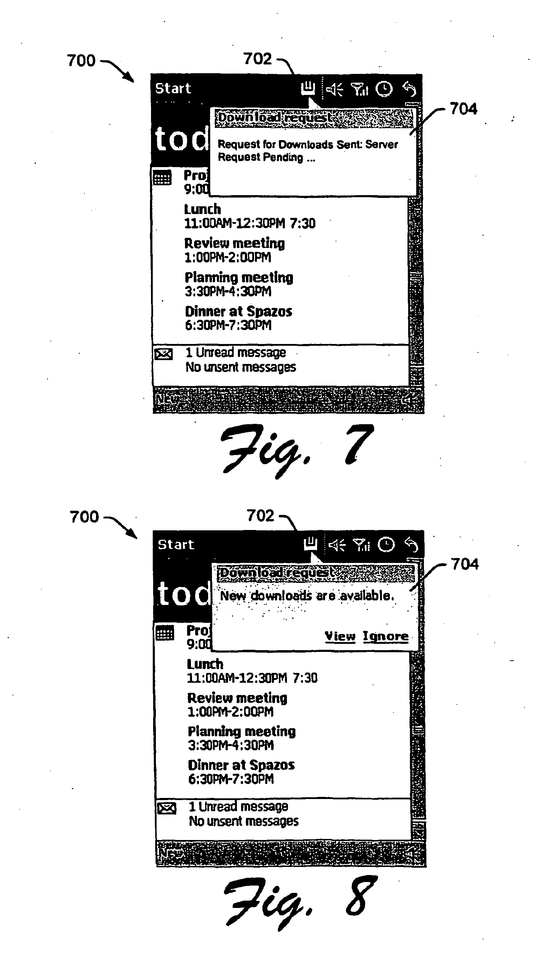

Fig. 7 illustrates a portion of the UI for a user to request new offerings from a management server.

Fig. 8 illustrates exemplary aspects of the mobile client UI to indicate to a user of the mobile client device 304 that new offerings are available for client download, and further allowing the user to view or ignore the new offerings.

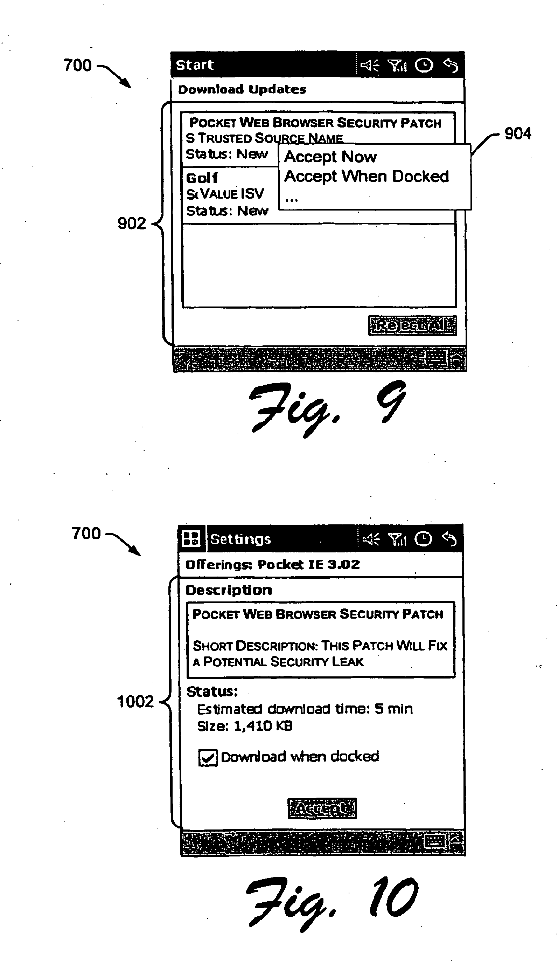

Fig. 9 shows an exemplary offering dialog box for presentation and interaction with a list of available offerings available for download to a mobile client device.

Fig. 10 shows aspects of an exemplary dialog to show details (e.g.., short or long offering descriptions) and/or download options to the user.

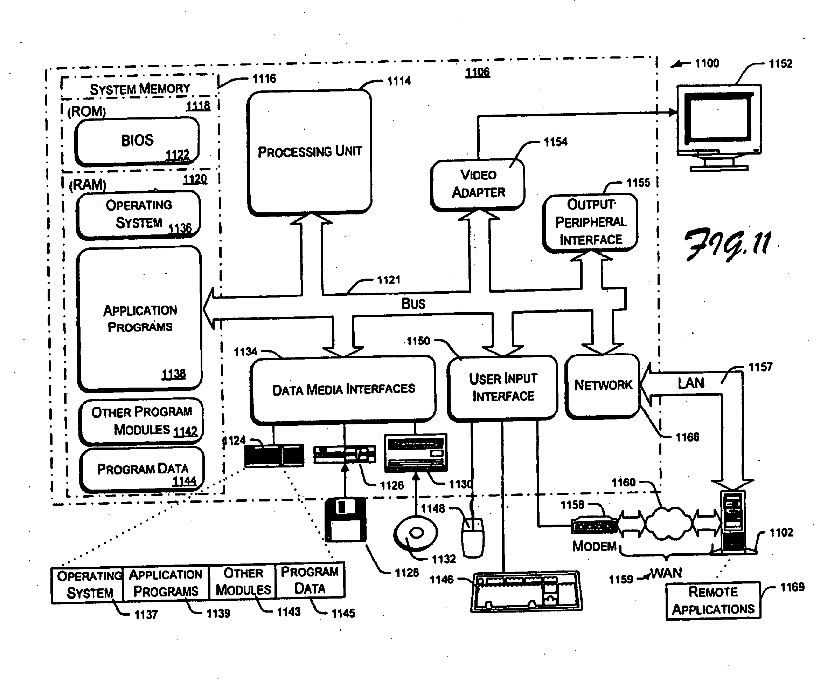

Fig. 11 shows an exemplary operating environment, wherein the systems and procedures for application delivery and remote configuration management may be implemented.

Fig. 3 shows a top-level representation of a system management framework 300. Framework 300 comprises a configuration management system or server 302, and a mobile client device 304. Management server 302 and mobile client device 304 directly communicate with one another over a wired or wireless network connection 306. Configuration management system 302 is configured to communicate with and manage multiple compatible client computers as described above. When such client computers are full-functioned computers such as traditional desktop computers, the client computers run special-purpose software as described above to provide compatibility with the functionality provided by the configuration management system.

In the example shown in Fig. 3, however, client device 304 is a mobile client that does not share a substantially permanent network connection with the management server 302. Instead, the mobile client is casually or intermittently connected to the management server over what may often be a substantially slow communication pathway represented by network connection 306. Examples of such remote client devices include laptops, handheld computers, PDAs, factory automation controllers, electronic point of sale terminals, gas station pumps, mobile telephones, etc. Some of these devices may have limited processing and storage resources as compared to full-functioned computers. Each of these aspects of the mobile client 304 makes it impossible, impractical, or undesirable to use techniques of conventional automated or other configuration management as discussed above for application delivery and remote configuration management of the mobile client 304.

To facilitate secure application delivery and configuration management of mobile client 304, communications between mobile client device 304 and management server 302 are performed using a secure sockets layer protocol such as Secure HTTP (HTTPS) for transmitting data securely over the World Wide Web. The mobile device periodically polls one or more management servers 302 for new offerings. An offering could be one or more applications, data files, and installation scripts to load onto the mobile device 304 or settings to install on the device 304.

Scheduling component 308 on mobile device 304 controls the frequency and conditions under which polling for such offerings occur. When new offerings are available, a user of mobile device 304 is notified and if the user accepts an offering, the application is automatically downloaded and installed onto mobile device 304. For purposes of this discussion, configuration management is the ability to manage mobile client 304 by maintaining inventory information regarding the device, to add applications to and remove applications from mobile device 304, to schedule polling events, create trusted sources, and so on. Scheduling component 308 exposes scheduler application programming interface (API) 430 to schedule, update, and otherwise manage configuration management at the mobile device. Many different components of the software on the device can support these operations: in one implementation, these operations are controlled by software embedded within the main UI component of the device. In another implementation, these operations are supported by a special secure server, which runs in a protected mode. An exemplary scheduler API 430 is shown below in APPENDIX A.

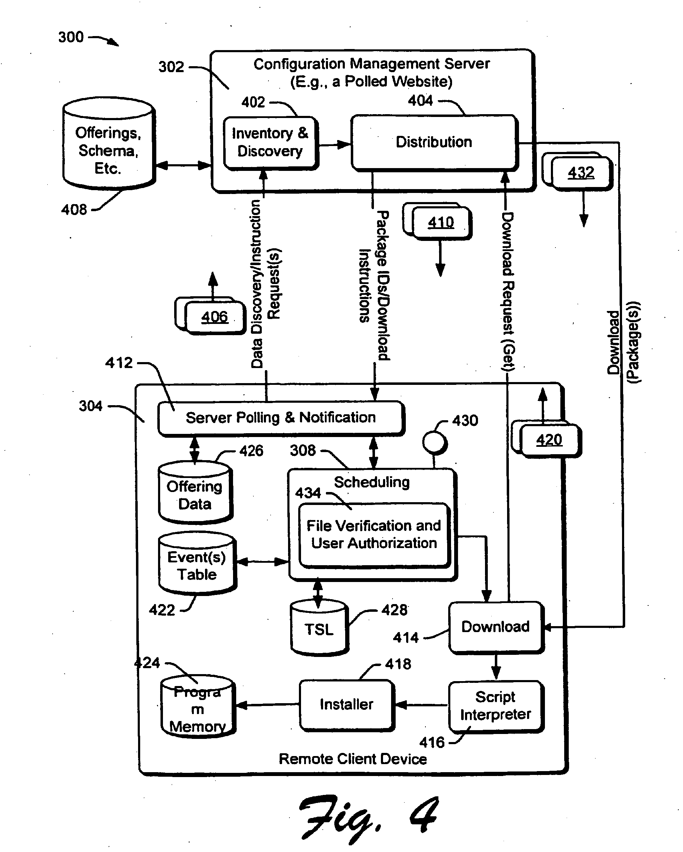

In the described embodiment, application download and configuration instructions provided upon request by management server 302 to mobile client 304 are formatted as Extensible Markup Language (XML) data in accordance with an XML data schema, an example of which will be set forth in subsequent portions of this discussion. The application download and configuration instructions include a software inventory that identifies applications available to the client for subsequent download. More specifically, the files include a list of package IDs corresponding to packages available for the client device to install. The configuration information may also specify a hardware inventory. As will be described in greater detail below with respect to Figs. 4-11, any computing device such as management server 302 which can generate and communicate download instructions according to the following description can provide for secure application delivery and configuration to any number of mobile client devices.

Fig. 4 shows logical components of system management framework 300 in more detail. Management server system 302 includes an inventory and discovery component 402 and distribution component 404. Inventory and discovery component 402 receives discovery data records from multiple mobile clients 304 as one or more electronic files 406 for purposes of asset management. Inventory and discovery component 402 is responsible for identifying new offerings 408 since a last successful poll by the corresponding client. The data discovery record includes at least an indication of when, if at all, a last successful pull of the targeted resource (e.g., indicated via an embedded URL) was performed.

In one implementation, if the corresponding URL has never been successfully polled by mobile client 304, the date of last successful poll is indicated as null. In another implementation, the mobile client further communicates a substantially unique ID (e.g., a cookie) to management server 302 with the data discovery record 406 for subsequent receipt of customized download instructions. Other information included with a data discovery message includes, for example, indications of hardware and/or software attributes associated with the mobile client, an identity of a user of the mobile client, etc. This information is typically stored in a database (not shown) that is accessible by system administrators.

Although Fig 4 shows offerings 408 as being coupled to the management server 302, such offerings can be deployed by any server device that can be connected to the mobile client 302.

Responsive to receiving data discovery record 406 from mobile client 304, inventory and discovery component 402 generates a corresponding download instruction file. The instructions can indicate conditions under which an application should be downloaded, as well as a URL (uniform resource locator) from which the application can be downloaded. The download instruction file contains information about one or more offerings 408 and each offering can include the download of one or more files. Distribution component 404 communicates download instructions as one or more electronic files 410 to the mobile client.

Distribution component 404 is also a connection point to which mobile client 304 can connect to download applications or packages (i.e., offerings 408) identified by download instructions. A package is a collection of files, along with instructions for downloading and installing the files.

Logical components of mobile client device 304 include polling and notification component 412, a scheduling component 308, a download component 414, an installation instruction interpreter 416, and a program or package installation component 418. The polling and notification component communicates and receives messages respectively to/from management server 302. Communicated messages include, for example, data discovery requests to identify one or more, offerings available for download, download requests, status (e.g., success, failure, incomplete, etc.) of offering delivery and installation, and so on. Messages received by the polling and notification component from the management server include, for example, download instructions, and downloaded packages.

In one implementation, mobile device 304 communicated messages also include a download instruction request and received messages also include a package ID list that specifies available offerings. The package ID list is separate from the detailed download instructions. Such an implantation is set forth in greater detail below in reference to an alternative implementation of application delivery and configuration management framework 300.

Scheduling component 308 schedules and executes data discovery and download events. In one implementation, the predetermined criteria used to schedule events are preconfigured by an administrative entity to provide positive control over configuration of mobile device 304. Such preconfigured events correspond to an automated or mandatory mode of operation, wherein the data discovery and/or download events are automatically generated to download and install one or more packages without user intervention. In another implementation, the polling and notification component 412 presents user interface (UI) components for user specification of actions that are translated to scheduled events to provide user control of application delivery, download, and installation. An example of such a UI is set forth in subsequent portions of this discussion in reference to Figs. 7-10.

Polling notification component 412 responds to such events by communicating corresponding messages to management server 302. A data discovery event causes communication (e.g., via HTTPS) of a data discovery record 406 to the management server to obtain offering download instructions 410. A download event causes communication of a download request 420 to the management server. For purposes of this discussion, data discovery events are often referred to as polling events since they are generally periodic in nature. Yet, any particular data discovery event may also be scheduled for a single occurrence.

Polling and download events are scheduled based on one or more predetermined criteria including, for example, any combination of time and connection criteria (e.g. every week on Monday at 3PM if a high bandwidth connection is present, at a random time to substantially guarantee that all data discovery messages from multiple mobile client devices 304 will be sent to management server 302 in a manner not likely to overload processing resources of the server, etc.). In this implementation, each event is associated with a name/description, event criteria, and a URL to access for offering identification or download. Scheduling component 308 maintains event information event table 422 for specifying polling and download events.

Polling- and notification component 412 receives and parses download instruction file(s) 410, scheduling the download instructions with scheduling component 308 for execution in accordance with the start time, delta time, and/or flags associated with the instructions. At the appropriate time, the scheduler instructs download component 414 to download the files described in the download instruction file. The instruction/script interpreter 416 executes the command(s) indicated by a "command" parameter of the download instruction file, which in most cases will initiate installation of the downloaded files by installation component 418 (e.g., copying files to appropriate directories on the client device, loading registry values, deleting temporary files, and so on).

The mobile client device 304 also has program memory 424 into which downloaded applications are installed, a database or other data structure 426 in which client device 304 maintains or caches an -offering list indicating applications or packages that have already been made available to the client device through previous interactions with management server 302, and a trusted source list ("TSL") 428 for authenticating download instructions 410 received from management server 302. The offering list is available for presentation to a user of the remote client independent of any connection to the management server. The remote client is configured to automatically remove an offering from the offerings list responsive to download and installation of the offering onto the remote client.

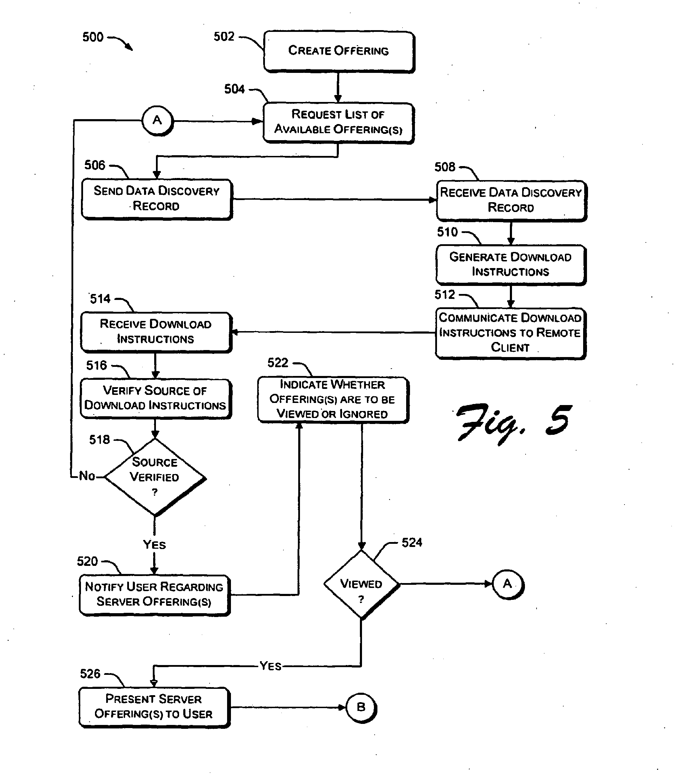

These components of mobile client 304 can be implemented with special purpose software installed on the client device and preconfigured with information such as a URL or other specification as well as authentication information and credentials. The interaction of these components with each other and with management server 302 will be explained in more detail in the discussion which follows, with reference to Fig. 5.

Fig. 5 shows methodological aspects of the framework shown in Fig. 4. Actions on the left-hand side of the figure are performed by components of mobile client device 304. Actions on the right-hand side of the figure are performed by components of management server 302. Actions in the middle are performed by a human being such as by administrator of management server 302 or by a user of the mobile client, the particular of which is specified below in the discussion corresponding to the action. The actions will be described with reference to a scenario where it is desired to distribute and install an application onto a requesting mobile client. An example application has two components: golf.cab and golf.dat. Installation on the mobile device involves copying both components to a directory called "\Program Files\Foo".

An initial action 502 comprises creating a distribution package containing the two program components "golf.cab" and "golf.dat". The "CAB" file is a common format used for program component distribution and which can be opened by the receiving client device for automatic installation on the client device. Alternatively, a non-CAB package can be assembled, comprising the application components and a file containing an installation script (typically created by a person acting as a system administrator) that can be executed by the client device to perform the installation tasks. In this example, the download instructions 410 (described in greater detail below in reference to TABLE 1) include installation instructions.

The user connects the mobile client 304 to the management server 302 over any combination of one or more wired and wireless networks. In an action 504, the user generates a polling event to request a list of available offerings 408 from the management server. Alternatively, the polling event may be automatically generated responsive to occurrence of a particular happening (e.g., a cold boot of the mobile client, a log-on event, etc.) and/or at one or more preconfigured intervals as determined by scheduling component 308. In one implementation, for example, the scheduler component is preconfigured to request a list of available offerings 408 from a particular management server 302 upon cold boot.

In an action 508, inventory and discovery component 402 of Fig. 4 receives the data discovery record 406. In response to receiving this information, inventory and discovery component performs action 510 of generating a download instruction file 410 based on information provided in the received data discovery record. The generated download instruction file includes various parameters relating to how, when, from where, and under what conditions the subject offering 408 or package may be downloaded by the mobile client 304.

In one implementation, the parameters include the following elements:
- Header
- Contents Block
   o ID (GUID)
   o Response URL for Status reports (optional)
- Download Instructions
   o Source Name
   o Offering Name
   o Offering Size (e.g., in bytes)
   o Offering Price
   o Short and/or Long Description
   o Download Instructions for Presentation to a User of the Mobile Client
   o Network - preferred transport over which this download is to be sent.
   o Reoccurrence Interval
   o Retry Interval for Error Recovery (e.g., default=60 seconds)
   o Retry Limit (e.g., default--5);
   o Start or Delta Time (in GMT)
   o Flags (Connection Type or Connection Class)
   o Download Type (e.g, a ROM update, a CAB file, etc.)
   o Required (YES or NO, default: NO)
   o File description(s)
      ■ Source URL
      ■ Destination on the Device (file location as a fully qualified path)
      ■ Signature (Signed hash of the file)
   o Command to run on the device after download (optional)

The "contents" block contains information pertaining to content of the instruction file 410, including a URL to which the mobile client 304 should report success or failure of the subsequently enumerated actions. The "download instructions" specify a "reoccurrence interval" which identifies an interval for the mobile client to periodically send polling events such as a data discovery event to management server 302. Other "download instructions" include either a "start time" or a "delta time" (an interval after which the operations should start), as well as "flags" indicating conditions under which the download should be allowed to proceed. For example, the flags might indicate that the download is to be initiated only when certain communications capabilities are present, such as being connected to a network over a high-speed network. As another example, the flags might indicate that a download is to be initiated only when the mobile client is connected to AC power (as opposed to battery power). Although this example uses "flags" to indication various information, such information may be represented in different manners such as via XML tags, etc.

The "required" parameter indicates whether the package is required to be installed on the mobile client 304. The "file description(s)" indicate source and destination locations of files that are to be copied to the mobile client, as well as signatures of the files. The "command" parameter identifies a command that is to be executed by the client device after successfully copying the files previously specified in the instruction file.

In an action 512, the distribution module 404 communicates generated download instructions as one or more electronic files 410 to mobile client 304. The download instruction file is preferably reported to the mobile client in accordance with an XML schema enforced by database 408. An example of such an XML schema is shown below in APPENDIX A. (Although shown in Fig. 4 as being part of offerings database 408, wherein offerings data are stored, the XML schema may be stored separate from offerings data).

TABLE 1 shows an example of actual data formatted in accordance with the XML schema of APPENDIX A. The XML data represents an exemplary download instruction file which is typically communicated to mobile client 304 as an HTTPS post. For purposes of illustration, boldface characters in the download instruction file represent examples of variable data values.

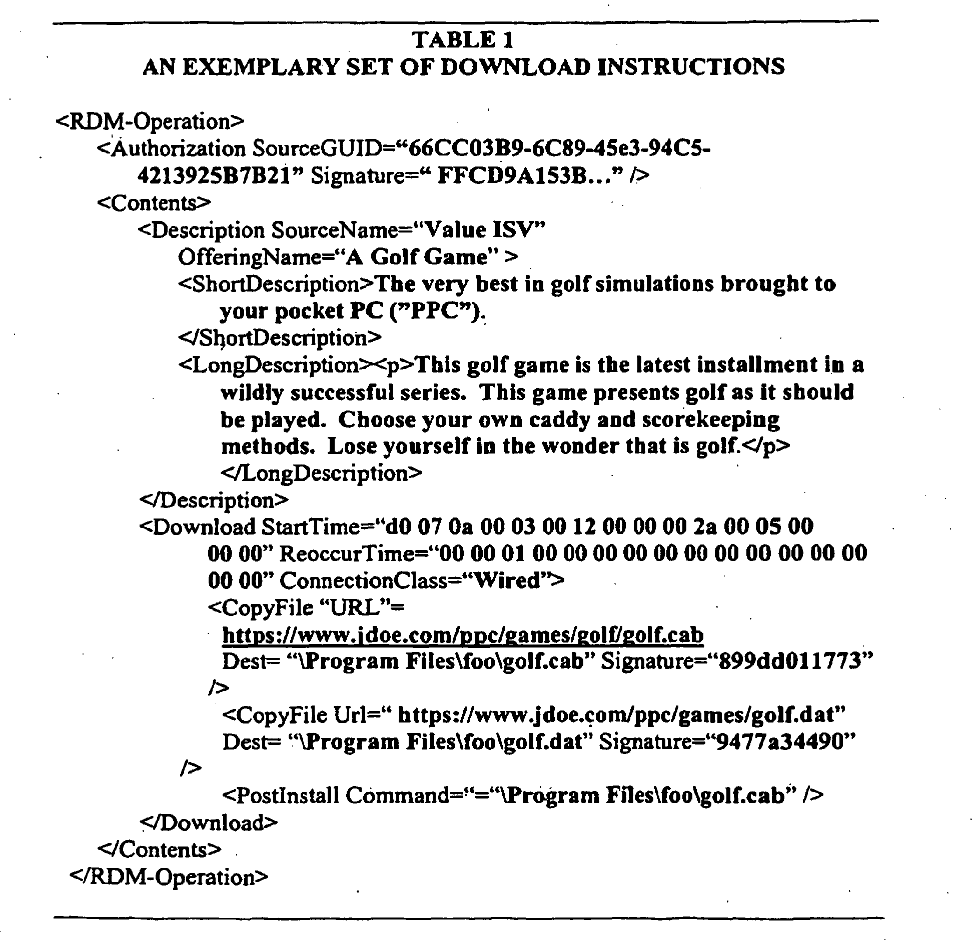

The preceding exemplary download instructions of TABLE 1 illustrate an offering from "Value ISV" of Golf. The instructions indicate that two files are to be downloaded to a \Program Files\foo directory. The download start time is identified by <Download StartTime> tag data. Downloads are specified to periodically reoccur as indicated by <Reoccur Time> tag data. Times are represented in Intel system time format. The program "golf.cab" is run after the download is complete.

In an action 514, server polling and notification component 412 of mobile client 304 receives download instructions 410 from management server 302. In one implementation, the download instructions include information for scheduling component 308 to remove out-of-date items from the offerings list 426 stored by the mobile client. This is via an optional download instruction tag, "Supercedes", which indicates a set of superceded offerings by their respective "Offering Name(s)". Superceded offerings are removed from the offerings list.

In an action 516, to ensure that mobile client application downloads remain secure, file verification and user authorization component 434 checks the digital signature (i.e., the claimed identity) of the received download instructions against one or more trusted source(s) from which download instructions are considered to be secure and reliable. Such trusted sources are stored in TSL 428. For instance; the TSL is a listing of trusted application delivery servers and their public keys. Scheduling component 308 exposes one or more interfaces via scheduler API 430 to update and otherwise manage contents of the TSL. An exemplary scheduler API 430 is shown below in APPENDIX A.

In one implementation, TSL 428 includes an X.600 certificate for the management server 302 which includes an RDN (name), public key, etc. Although a certificate in the TSL may be purposefully or accidentally deleted from the TSL, such a deleted certificate cannot simply be replaced with another key. This ensures that mobile client 304 application delivery remains secure. Additionally, even if a particular trusted source certificate is purposefully or ' accidentally deleted from the TSL, as long as a portion of non-volatile memory of the mobile client is so preconfigured, a cold boot of mobile client 304 can reinstate the deleted certificate.

In an action 518, the verification component 434 determines whether received download instructions 410 are authentic. If not, the procedure waits for another scheduled event (or other event) such as a data discovery event as indicated in an action 504. Whereas, responsive to receiving an authenticated set of download instructions, in an action 520, scheduling component 308 notifies the user of mobile client 304 of any available offerings. When new downloads are available, scheduling component 308 stores received download information 410 into memory (e.g., into offerings data store 426).

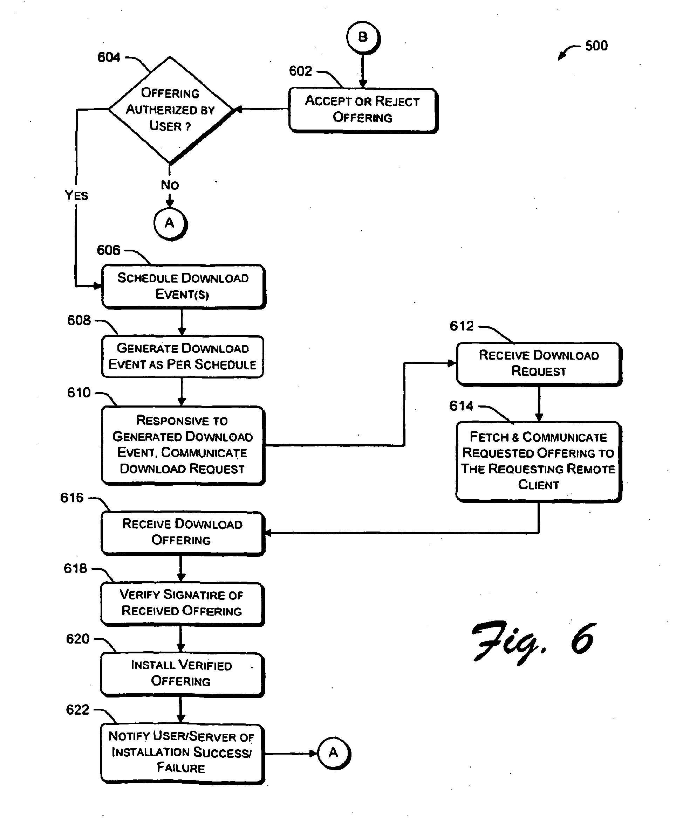

In an action, 522, the user specifies via a user interface (UI) whether the new offerings are to be viewed or ignored. An example of such a UI is set forth in subsequent portions of this discussion in reference to Figs. 7-10. In an action 524, the offerings are determined to be ignored, and procedure 500 continues as indicated by on page reference "A". In an action 526, the user having chosen to view the offerings, each indicated download offering along with a corresponding status is presented to the user for viewing and interaction via the UI. The corresponding status may indicate, for example, a freshness or posting indication of the particular offering (e.g., new, the date posted, etc.), a download progress indication (e.g., download accepted, in progress, installed, etc.), etc. The procedure continues in an action 602 of Fig. 6 as indicated by on-page reference "B".

Fig. 6 shows further aspects of an exemplary procedure 500 to perform application delivery and remote configuration management via the framework of Fig. 4. Actions on the left hand side of Fig. 6 are performed by components of mobile client device 304. Actions on the right-hand side of the figure are performed by components of management server 302. Actions in the middle are performed by a user of the mobile client. The actions are described with reference to the scenario of Fig. 5.

In an action 602, the user accepts or rejects any one or more particular offerings. An exemplary UI 700 for the user to accomplish this is described in greater detail below in reference to Figs. 7-10. In an action 604, the mobile device determines if the user of mobile device 304 has authorized an offering 408. In any event, download instructions 410 for each respective offering indicated are stored by the scheduling component 308 until the offering is expired at the server or the user confirms or rejects a listed offering. If the user has rejected each of the one or more presented offering(s), the procedure 500 waits for a scheduled or unscheduled event to process, such as a data discovery event as indicated in an action 504 of Fig. 5 (i.e., as indicated by on page reference "A").

Upon user confirmation of an offering, in an action 606, scheduling component 308 schedules a download event to retrieve the confirmed offering from a location specified in the download instructions. The download event may be scheduled in accordance with user specified criteria or in accordance with start time, delta time, and/or flags associated with the download instructions. The download event may be triggered immediately or may be scheduled based on one or more predetermined criteria such as specific connection conditions (e.g., when the mobile client is docked).

In an event 608, scheduling component 308 generates the scheduled download event as per the schedule of action 606. In an action 610, and upon detection of the generated download event, download component 414 communicates a download request (e.g., via HTTPS/IP) as one or more electronic files 420 to management server 302. In an action 612, distribution component 404 of the management server receives the communicated download request. Responsive to receiving the download request, the distribution component in an action 614 fetches and communicates the requested offering(s) 408 as one or more electronic files 432 to mobile client 304.

In an action 616, download component 414 receives the communicated offering(s) 408 from management server 302. The download component verifies the signature of the download (e.g., a hash) in an action 618, and passes the downloaded files to instruction interpreter 416. In an action 620, the instruction interpreter executes command(s) indicated by an optional "command" parameter of the download instruction file 410, which in most cases will initiate installation of the downloaded files by installation component 418. Upon successful installation of an application and/or configuration settings, in an action 622 the user is notified via the notification engine 412 that installation is complete. In one implementation, the server is also notified with a success/failure status message (not shown) of the application delivery and remote configuration actions of the mobile client.

### An Exemplary UI for Application Delivery and Mobile Device Configuration

Figs. 7-10 show aspects of an exemplary user interface (UI) 700 presented by a client computing device such as mobile client 304 to perform application delivery and configuration of the computing device. In particular, Fig. 7 illustrates a portion of the UI for a user to request new offerings 408 from management server 302. Download icon 702, when selected by a user, causes the scheduling component to send a data discovery record 406 as described above to the management server. Subsequent to submitting a query to obtain a list of new offerings, bubble menu 704 entitled "Download request", indicates to the user that the data discovery request has been sent to the management server and further indicates that a response from the server is pending.

Fig. 8 illustrates exemplary aspects of mobile client UI 700 to indicate to a user of the mobile client device 304 that new offerings 408 are available for client download. Specifically, bubble menu 704. indicates to the user that there are new offerings to download from management server 302; the bubble text in this case is "New downloads are available". Otherwise, the bubble text indicates that "No new offerings" have been posted to the management server since the last download request (if any) was received from the mobile client.

Additionally, when new offerings from management server 302 are available for user download, bubble menu 704 presents at least two user selectable buttons for viewing the offerings or for dismissing the offering notification. In this example, the buttons are respectively titled "View Offerings" and "Ignore". Via these buttons, the user can specify whether or not presentation of the available offerings for possible further user interaction (e.g., download, request for additional information, etc.) is desired. User action(s) may be specified via a pointing device such as a pen or mouse, or other technology such as by means of a voice command.

Fig. 9 shows an exemplary offering dialog box 902 for presentation and interaction with a list of available offerings available for download to mobile client device 304. The dialog box is an example of a UI presented responsive to user selection of the "View offerings" button of Fig. 8. In this example, two offerings are presented to the user: a "Pocket Web Browser Security Patch" and a "Golf' application such as that specified in the exemplary download instructions of TABLE 1 discussed above. The offerings list presented by dialog 902 will indicate "no offerings" if the user opens it as a standalone application or the stored offering list represented by offering data 426 is empty.

In this example, a tap and hold user action over an offering in the offerings list presented by dialog 902 will allow a user to choose download options from the Accept... popup menu 904. For example, a tap and hold action over the "Pocket Web Browser Security Patch" offering allows the user to download the offering now (e.g., a default) via the "Accept" menu item, or download the offering later, for example, via the "Accept When Docked" menu item. In one implementation, dialog 702 further includes a button such as a "reject all" button to allow user to quickly and simply dispose of the listed offerings.

Fig. 10 shows further aspects of the exemplary application delivery and remote configuration UI 700. In particular, Fig. 10 shows dialog 1002, which is presented to show details (e.g., short or long offering descriptions) and/or download options to the user. In one implantation, this dialog box is presented responsive to a user tap action (in contrast to tapping and holding) over a particular offering.

### An Exemplary Operating Environment

Fig. 11 shows an exemplary operating environment 1100, wherein the systems and procedures for application delivery and remote configuration management may be implemented. Management server 302 and mobile client 304 components and functionality described above are respectively implemented with one or more individual computers. Fig: 11 shows components of typical example of such a computer, referred by to reference numeral 1106. The components ' shown in Fig. 11 are only examples, and are not intended to suggest any limitation as to the scope of the functionality of the invention; the invention is not necessarily dependent on the features shown in Fig. 11.

. Generally, various different general purpose or special purpose computing system configurations can be used. Examples of well known computing systems, environments, and/or configurations that may be suitable for use with the invention include, but are not limited to, mobile client devices, personal computers, server computers, laptop devices, multiprocessor systems, microprocessor-based systems, network PCs, minicomputers, mainframe computers, distributed computing environments, computing devices with less that full desktop functionality that include any of the above systems or devices, and the like.

The functionality of the computers is embodied in many cases by computer-executable instructions, such as program modules, that are executed by the computers. Generally, program modules include routines, programs, objects, components, data structures, etc., that perform particular tasks or implement particular abstract data types. Tasks might also be performed by remote ' processing devices that are linked through a communications network. In a distributed computing environment, program modules may be located in both local and remote computer storage media.

The instructions and/or program modules are stored at different times in the various computer-readable media that are either part of the computer or that can be read by the computer. Programs are typically distributed, for example, on floppy disks, CD-ROMs, DVD, or some form of communication media such as a modulated signal. From there, they are installed or loaded into the secondary memory of a computer. At execution, they are loaded at least partially into the computer's primary electronic memory. The invention described herein includes these and other various types of computer-readable media when such media contain instructions, programs, and/or modules for implementing the steps and actions described above in conjunction with microprocessors or other data processors. The invention also includes the computer itself when programmed according to the methods and techniques described above.

For purposes of illustration, programs and other executable program components such as the operating system are illustrated herein as discrete blocks; although it is recognized that such programs and components reside at various times in different storage components of the computer, and are executed by the data processor(s) of the computer.

With reference to Fig. 11, the components of computer 1106 may include, but are not limited to, a processing unit 1114, a system memory 1116, and a system bus 1121 that couples various system components including the system memory to the processing unit 1114. The system bus 1121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISAA) bus, Video Electronics Standards Association (VESA) local bus, and Peripheral Component Interconnect (PCI) bus also known as the Mezzanine bus.

Computer 1106 typically includes a variety of computer-readable media. Computer-readable media can be any available media that can be accessed by computer 1106 and includes both volatile and nonvolatile media, removable and non-removable media. By way of example, and not limitation, computer-readable media may comprise computer storage media and communication media. Computer storage media include volatile and nonvolatile, removable and non-removable media implemented in any method or technology for storage of information such as computer-readable instructions, data structures, program modules, or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 1106. Communication media typically embodies computer-readable instructions, data structures, program modules or other data in a modulated data signal such as a carrier wave or other transport mechanism and includes any information delivery media. The term "modulated data signal" means a signal that has one or more if its characteristics set or changed in such a manner as to encode information in the signal. By way of example, and not limitation, communication media includes wired media such as a wired network or direct-wired connection and wireless media such as acoustic, RF, infrared and other wireless media. Combinations of any of the above should also be included within the scope of computer readable media.

The system memory 1116 includes computer storage media in the form of volatile and/or nonvolatile memory such as read only memory (ROM) 1118 and random access memory (RAM) 1120. A basic input/output system 1122 (BIOS), containing the basic routines that help to transfer information between elements within computer 1106, such as during start-up, is typically stored in ROM 1118. RAM 1120 typically contains data and/or program modules that are immediately accessible to and/or presently being operated on by processing unit 1114. By way of example, and not limitation, Fig. 11 illustrates operating system 1136, application programs 1138, other program modules 1142, and program data 1120.

When computer 1106 is implemented as management server 302 of Fig. 4, application programs 1138 include, for example, inventory and discovery component 402 and distribution component 404. In a similar implementation, program data 1144 includes, for example, data discovery message(s) 406 received from a mobile client computer 304, download instructions 410 for indicating one or more offerings that are available to the mobile client, a schema 408 for enforcing semantics and syntax of the download instructions, and offerings 408 for distribution as one or more electronic files or packages to the mobile client.

When computer 1106 is implemented as mobile client computer 304 of Fig. 4, application programs 1138 include, for example, polling and notification component 412, scheduling component 308, download component 414, instruction/script interpreter 416, installer component 418, and file verification and authorization component 434 of the scheduler. In a similar implementation, program data 1144 includes, for example: (a) data discovery message(s) 406 for communication to management server 302; (b) download instructions 410 received from the management server and saved as offerings data 426; (c) a - trusted source list 428 for authenticating data received from the management server; (d) downloaded applications 424 originally received from the management server as one or files or packages 432; and (e) a polling and download event description table 422 for storage of information to schedule data discovery messages and download requests for communication to the management server.

The computer 1106 may also include other removable/non-removable, volatile/nonvolatile computer storage media. By way of example only, Fig. 11 illustrates a hard disk drive 1124 that reads from or writes to non-removable, nonvolatile magnetic media, a magnetic disk drive 1126 that reads from or writes to a removable, nonvolatile magnetic disk 1128, and an optical disk drive 1130 that reads from or writes to a removable, nonvolatile optical disk 1132 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 1124, magnetic disk drive 1126 and optical disk drive 1130 are typically connected to the system bus 1121 by one or more fixed or removable memory interfaces such as interface 1134.

The drives and their associated computer storage media discussed above and illustrated in Fig. 11 provide storage of computer-readable instructions, data structures, program modules, and other data for computer 1106. In Fig. 11, for example, hard disk drive 1124 is illustrated as storing operating system 1137, application programs 1139, other program modules 1143, and program data 1145. Note that these components can either be the same as or different from operating system 1136; application programs 1138, other program modules 1142, and program data 1144; they are given different numbers here to illustrate that, at a minimum, they are different copies. A user may enter commands and information into the computer 1106 through input devices such as a keyboard 1146 and pointing device 1148, commonly referred to as a mouse, trackball, or touch pad. Other input devices (not shown) may include a microphone, joystick, game pad, satellite dish, scanner, or the like. These and other input devices are often connected to the processing unit 1114 through a user input interface 1150 that is coupled to the system bus, but may be connected by other interface and bus structures, such as a parallel port, game port, or a universal serial bus (USB). A monitor 1152 or other type of display device is also connected to the system bus 1121 via an interface, such as a video interface 11308. In addition to the monitor, computers may also include other peripheral output devices (not shown) such as speakers and a printer, which may be connected through an output peripheral interface 1155.

The computer is designed to operate in a networked environment using logical connections to one or more remote computers, such as a remote computer 1102. The remote computer 1102 may be a mobile client device, a personal computer, a management server, a router, a network PC, a peer device or other common network node, and typically includes many or all of the elements described above relative to computer 1106, although only a memory storage device 1169 has been illustrated in Fig. 11. The logical connections depicted in Fig. T1 include a local area network (LAN) 1157 and a wide area network (WAN) 1159, but may also include other networks such as home networks, organizational intranets, and so on. Such networking environments are commonplace in offices, enterprise-wide computer networks, intranets, and the Internet.

When used in a LAN networking environment, the computer 1106 is connected to the LAN 1157 through a network interface or adapter 1166. When used in a WAN networking environment, the computer 1106 typically includes a modem 1158 or other means for establishing communications over the WAN 1159, such as the Internet. The modem 1158, which may be internal or external, may be connected to the system bus 1121 via the user input interface 1150, or other appropriate mechanism. In a networked environment, program modules depicted relative to the computer 1106, or portions thereof, may be stored in the remote memory storage device. By way of example, and not limitation, Fig. 11 illustrates remote application programs 1169 as residing on memory device coupled to computer 1102. It will be appreciated that the network connections shown are exemplary and other means of establishing a communications link between the computers may be used.

Limited resource client device 304 is implemented using technologies similar to those shown in Fig. 11, albeit on a more limited scale. Furthermore, a limited-resource client device such as a PDA, cell phone, pocket PC, etc. typically does not possess all the functionality illustrated in Fig. 11. For example, a limited-resource client often does not have drives for removable magnetic media such as floppy disks or CD-ROMs. Such clients typically have much less memory capacity; smaller display devices and keyboards, slower or less capable processors. Furthermore, many such devices have electronic flash memory in place of a hard disk. In addition, limited-resource devices typically run an operating system that does not have the full set of features supported by desktop operating systems: For example, limited-resource devices might run the Windows CE® operating system, rather than the Windows XP® operating system.

### Alternative Embodiments

Application delivery and configuration framework 300 of Figs. 3 and 4 may be implemented in alternative manners. For example, in one implementation, rather than immediately receiving detailed download instructions responsive to communicating a data discovery request to management server 302, mobile device 304 receives a package identification (ID) list from inventory and discovery component 402. The package ID list identifies any number (possibly zero) of packages (i.e., offerings 408) that are available to the mobile device since a last successful poll to a URL by the mobile device. Each identified package is available for the mobile client to download and install. Distribution component 404 communicates the generated package ID list to the mobile client as one or more electronic files 410.

Generally, the package ID list will be substantially small as compared to the byte-size of a file that includes all download instructions for all available packages. This is because the package ID list does not include detailed download information (e.g., conditions for download, download location, preferred network transport, and so on). Instead, the package ID list includes only that information needed for mobile device 304 or a user of the mobile device to respectively automatically or manually determine that the package is desired for subsequent download and delivery (e.g., mandatory administrative download verses a user desired download).

For instance, for each represented package, the package ID list may specify: a source name, offering name, offering size (e.g., in bytes), price, short and/or long description, and/or an indication of whether the package is required-in other words, just enough information to determine of the package is to be automatically downloaded by the mobile device or offered to the user for manual download selection. An exemplary user interface (UI), for user specific authorization to download a particular package was set forth in previous portions of this discussion.

In one implementation, if a particular package is required or mandatory, the package ID list includes only the indication of the package ID and the required indication. Polling and notification component 412 tags on the "required" status to automatically request corresponding detailed download instructions from management server 302.

Responsive to determining that a package is mandatory (i.e., required) or desired by a user, the polling and notification component 412 communicates a request to receive corresponding download instructions from management server 302. As discussed above, the download instructions contain detailed download information about one or more packages 408 or offerings and each offering can include the download of one or more files. The download instructions may also indicate conditions under which the offering should be downloaded, as well as a URL (uniform resource locator) from which the offering can be downloaded.

Responsive to receiving the download instruction request from mobile client 304, distribution component 404 communicates download instructions for the specified package(s) 408 as discussed above as one or more electronic files 410 to the mobile client. These download instructions are scheduled for execution by scheduling component 304 according to the operations discussed above in reference to Figs. 3-11.

Although data discovery messages and download instruction requests as well as package ID lists and download instructions in this example are respectively shown as one or more electronic files 406 and 410, this is done for purposes of discussion only, and each message is a separate and independent message.

### Conclusion

Although the invention has been described in language specific to structural features and/or methodological operations or actions, it is to be understood that the invention defined in the appended claims is not necessarily limited to the specific features or actions described. Rather, the specific features and actions are disclosed as preferred forms of implementing the claimed invention.

### APPENDIX A

### An Exemplary Schema for Download Instructions

For purposes of illustration, boldface characters in the following XML schema represent examples of identifiers, data types, constraints, etc.

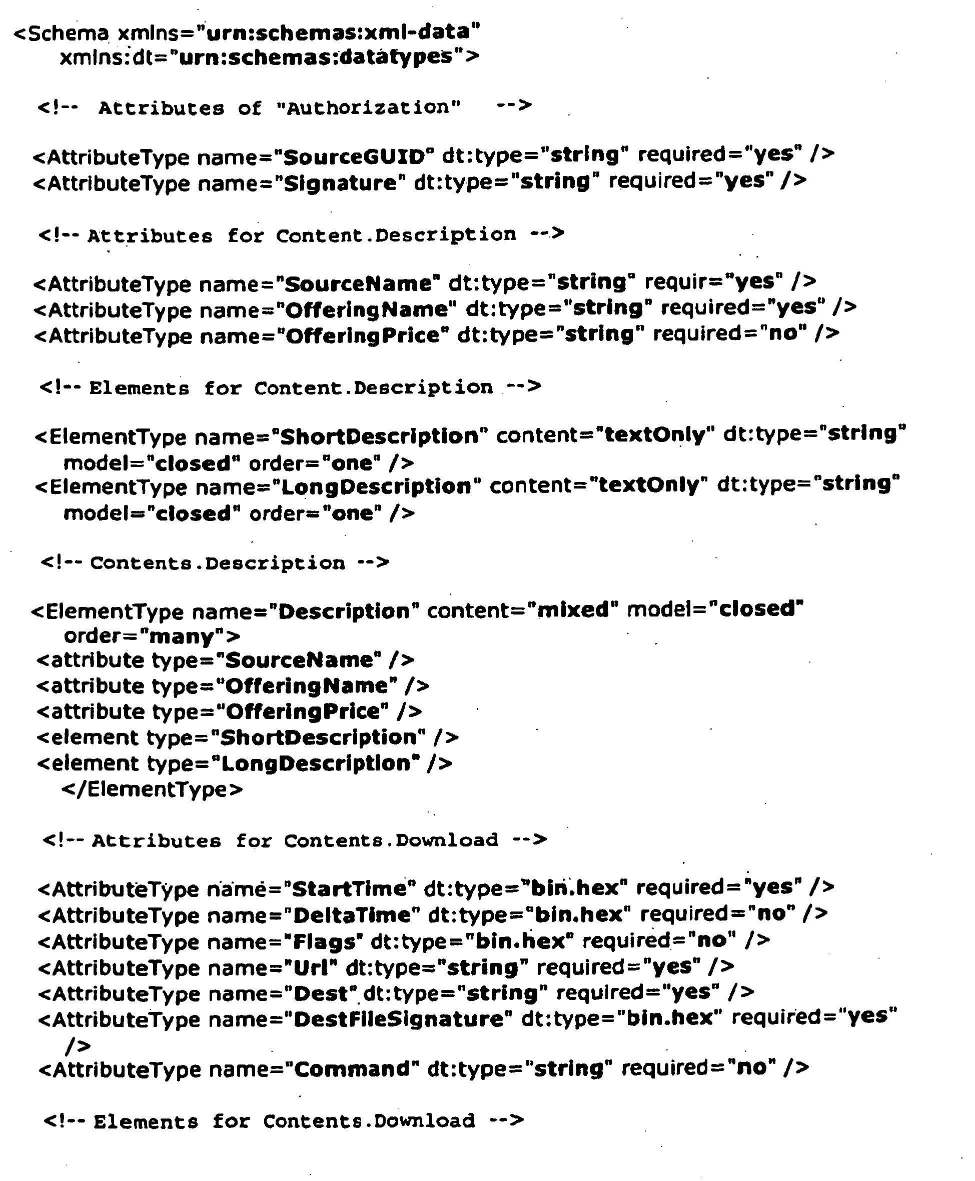

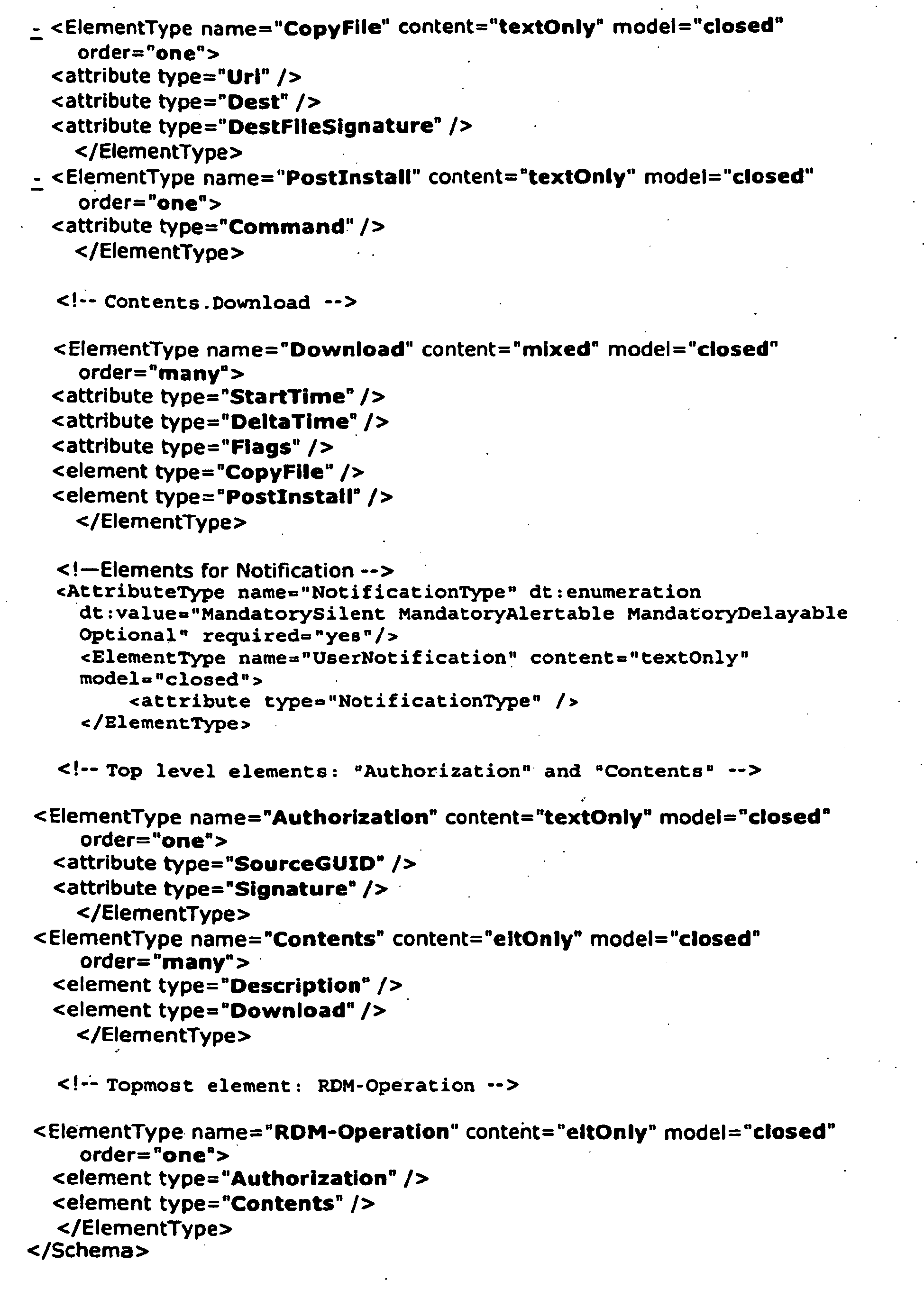

### APPENDIX B

### An Exemplary Scheduler API

The following is an exemplary scheduler API 430 of Fig. 4:

```
 #ifndef_ADLAPI_H_D1C5FA6B_0A47_4573_93E9_DBF0275C3F5A_
 #define_ADLAPI_H_D1C5FA6B_0A47_4573_93E9_DBF0275C3F5A_

 #ifdef_cplusplus
 extern "C" {
 #endif

 //**********************************************************************************
 //
 // Application download trusted source structure
 //
 //**********************************************************************************
 typedef struct tagADLTRUSTEDSRCINFO
 {
   DWORD cbSize;

   PTSTR szTrustedSrcName;
   PBYTE pbSerializedCert;
   DWORD cbSerializedCert;
 } ADLTRUSTEDSRCINFO, *PADLTRUSTEDSRCINFO;

 //++++++
 //
 // ADChgTrustedSrcList
 //
 // Adds or removes a member to or from the App DL trusted source list

 WINSHELLAPI
 BOOL
 ADChgTrustedSrcList(ADLTRUSTEDSRCINFO *patsi, BOOL fAdd);

 //
 // End ADChgTrustedSrcList
 //
 // -------
 
 //**************************************************************************************//
 // Application download constants and structures
 //
 //***************************************************************************************

 // For the nonce, a "fast network" runs at >= 1 Mb/sec
 #define ADL_FAST_NETWORK_SPEED 1000000

 // This operation can be performed over a slow connection '
 #define ADL_SLOW_NETWORK 0x0001

 // This operation can be performed over a fast network
 #define ADL_FAST_NETWORK 0x0002

 // There's some means other than desktop passthrough through
 // which this operation could be performed
 #define ADL_NONPASSTHROUGH_ALLOWED (ADL_FAST_NETWORK) |
 ADL_SLOW_NETWORK)

 // This operation can be performed over desktop passthrough
 #define ADL_PASSTHROUGH 0×0004

 // This operation can be performed over any connection
 #define ADL_ANYCONNECTION 0×0000FFFF

 // This operation is performed repeatedly
 #define ADL_POLLED 0×80000000

 typedef struct tagADLTASKINFO
 {
  DWORD cbSize;

  HANDLE hTask;
  BOOL fActive;

  DWORD cItems;
  PTSTR * wzItemNames;
  DWORD cbItemNames;
  DWORD cbItemNamesReqd;
  DWORD * pdwItemTypes;
  DWORD cbItemTypes;
  DWORD cbItemTypesReqd;
  DWORD * pcbItemSizes;
  DWORD cbItemSizes;
  DWORD cbItemSizesReqd;
  PBYTE * ppbltems;
  DWORD cbItems;
  DWORD cbItemsReqd;
 } ADLTASKINFO, *PADLTASKINFO;

 //+++++
 //
 // ADChgTaskLis
 //
 // Adds or removes a new App DL task

 WINSHELLAPI
 BOOL
 ADChgTaskList(ADLTASKINFO *pati, BOOL fAdd);

 //
 // End ADChgTaskList
 //

 //-----

 //+++++
 //
 // ADTasklnfo
 //
 // Sets or gets the information about a particular task

 WINSHELLAPI
 BOOL
 ADTaskInfo(ADLTASKINFO *pati, BOOL fSet);

 //
 // End ADTaskInfo
 //
 //-----
 
 //******************************************************************************************
 //
 //Notification messages and constants
 //
 //******************************************************************************************
 #define RDM_FIRST WM_APP+0×0200

 #define RDM_NOTIFYTASKCREATED RDM_FIRST
 #define RDM_NOTIFYTASKSTARTED RDM_FIRST + 0x01
 #define RDM_NOTIFYTASKCOMPLETED RDM_FIRST + 0x02
 #define RDM_NOTIFYTASKSTATECHANGED RDM_FIRST + 0x03
 #define RDM_NOTIFYTASKDESTROYED RDM_FIRST + 0x04
 #define RDM_NOTIFYTASKENABLED RDM_FIRST + 0x05
 #define RDM_NOTIFYGETDATABEGIN RDM_FIRST + 0x10
 #define RDM_NOTIFYGETDATAEND RDM_FIRST + 0x11
 #define RDM_NOTIFYPROCESSDATABEGIN RDM_FIRST + 0x20
 #define RDM_NOTIFYPROCESSDATAEND RDM_FIRST + 0x21
 #define RDM_NOTIFYDATAREAD RDM_FIRST +0x30
 #define RDM_NOTIFYBYTESA V AIL RDM_FIRST + 0x31

 #define RDM_CURRENTTASKS RDM_FIRST+0x40

 #define RDM_LAST RDM_CURRENTTASKS

 #define TASKSTATE_INELIGIBLE 1
 #define TASKSTATE_PENDINGNETWORK 2
 #define TASKSTATE_ACTIVE 3
 #defineTASKSTATE_HALTED 4

 //+++++
 //
 // ADRegisterCallback
 //
 // Adds or removes a member to or from the App DL callback window list

 WINSHELLAPI
 BOOL
 ADRegisterCallback(HWND hWndCallback, BOOL fRegister);

 //
 // End ADRegisterCallback
 //
 //-----
 
 #ifdef _cplusplus
 }
 #endif

 #endif //
 !defined(_ADLAPI_H_D1C5FA6B_0A47_4573_93E9_DBF0275C3F5A_)

 LPWSTR rgwzHeads[] =
  {L"StartTime",
  L"DeltaTime",
  L"RetryTime",
  L"Flags",
  L"Type",
  L"SourceRDN",
  L"Url",
  L"UrlCountersignature" } ;

 DWORD rgdwTypes[] =
  {REG_BINARY, .
  REG_BINARY, . '
  REG BINARY,
  REG_DWORD, '
  REG_SZ,
  REG_SZ,
  REG_SZ, ' .
  REG_BINARY};

 DWORD rgcbData[] _
  {sizeof(SYSTEMTIME),
  sizeof(SYSTEMTIME),
  sizeof(SYSTEMTIME),
  sizeof(DWORD),
  sizeof(WCHAR) * (1 + lstrlen(g_wzType)),
  sizeof(WCHAR) * (1 + lstrlen(szName)),
  sizeof(WCHAR) * lstrlen(g_wzUrl), // BOGUSBOGUS
  cbUrlSig};

 PBYTE rgpbData[] =
  {(PBYTE) &g_stStartTime,
  (PBYTE) &g_stDeltaTime,
  (PBYTE) &g_stRetryTime,
  (PBYTE) &g_dwFlags,
  (PBYTE) g_wzType,
  (PBYTE) szName,
  (PBYTE) g_wzUrl,
  (PBYTE) pbUrlSig};

 ADLTASKINFO ati =
 {
  sizeof(ADLTASKINFO),
  NULL,
  g_dwFlags,
  ARRAYSIZE(rgpbData),
  rgwzHeads,
  rgdwTypes,
  rgcbData,
  rgpbData};
```

## Claims

1. A method to perform configuration management at a mobile device (304), the method being performed by said mobile device, the method comprising:
communicating a request (504) to a server (302), the request indicating a time of last successful download from a URL hosted by the server,
responsive to communicating the request that indicates the time of last successful download, receiving (514) a set of download instructions from the server, the download instructions being formatted based on a schema and indicating a location from which to download one or more offerings (410), the one or more offerings having been made available since the time of last successful download;
determining the one or more offerings from the received download instructions;
notifying (520) a user of the mobile device of the determined available offerings;
receiving a selection request (522) from the user of the mobile device indicating a desired action corresponding to at least one offering of the one or more determined offerings; and
performing the desired action based on information provided by the download instructions.

2. A method as recited in claim. 1, wherein communications between the mobile device and the server are via a secure protocol.

3. A method as recited in claim 2, wherein the secure protocol is HTTPS.

4. A method as recited in claim 1, wherein performing the desired action further comprises presenting a short or long description of the at least one offering to the user for review.

5. A method as recited in claim 1, further comprising:
exposing an application programming interface to add or remove information from a trusted source list; and
authenticating the download instructions against a trusted source list.

6. A method as recited in claim 1, further comprising exposing an application programming interface to define one or more events usable by the mobile device to schedule a file for download, the file being identified by received download instructions.

7. A method as recited in claim 1, wherein performing the desired action further comprises indicating that the user is not interested in the at least one offering by removing the at least one offering from a locally cached offering list.

8. A method as recited in claim 1, wherein performing the desired action further comprises:
communicating a download request to the location;
responsive to communicating the download request, receiving the at least one offering by the mobile device; and
installing the at least one offering as one or more files on the mobile device.

9. A method as recited in claim 1, wherein performing the desired action further comprises:
scheduling an event based on particular criteria, the event corresponding to communication of a download request message to the location;
responsive to occurrence of the event, communicating the download request message to the location; and
responsive to communicating the download request message, receiving the at least one offering by the mobile device.

10. A method as recited in Claim 9, wherein the particular criteria are based on any combination of one or more of user input, scheduling information provided by the download instructions, a hardware event, and a software event.

11. A method as recited in claim 1, further comprising receiving trusted data from an un-trusted server source by authenticating the download instructions against a trusted source list.

12. A method as recited in claim 11, wherein the mobile device is a mobile device that is not protected by a corporate firewall.

13. A method as recited in claim 11, wherein further operations of the mobile device comprise:
responsive to determining authenticity of the download instructions, requesting at least a portion of the one or more offerings;
responsive to requesting the portion, receiving the portion from the server;
determining authenticity of the portion via a hash function; and
responsive to authenticating the portion, installing the portion into mobile device memory.

14. A computer-readable medium comprising computer-program instructions to perform configuration management of a mobile device, the computer-program instructions being executable by a computer and for performing operations of a method as recited in claim 1.

15. A mobile device comprising a processor coupled to a memory, the memory comprising computer-program instructions to perform configuration management of a mobile device, the processor being configured to fetch and execute the computer-program instructions from the memory to perform operations of a method as recited in claim 1 -

16. A system management framework (300) comprising a management server (302) and a mobile computing device (304), wherein:
the management server (302) is configured to communicate download instructions for purposes of configuration management of mobile computing devices (304); wherein said download instructions being determined by the management server (302) responsive to receiving, from the mobile computing device (304), an indication of a time of last successful download from a URL hosted by the management server (302); and
the mobile computing device (304) is configured to connect to the management server over a non-persistent connection, the mobile computing device being further configured to request and receive the download instructions (410) from the management server and
the mobile computing device (304) being further configured to determine from the received download instructions (410) a set of offerings available for download and installation by the mobile computing device, the offerings representing said one or more files;
the mobile computing device (304) being further configured to allow a user of the mobile device to accept or reject download and installation of any one or more files available since a last successful download operation conducted by the mobile computing device; and
said mobile computing device (304) being further configured to notify said user of the mobile device of any determined available offerings; and
said mobile computing device (304) being further configured to accept or reject said download and installation based on a user selection in response to the notification of said determined available offerings.

17. A system management framework as recited in claim 16, wherein the download instructions are communicated to the mobile computing device as separate messages, a first message comprising a package identification list and a second message comprising detailed download instructions for one or more packages specified in the package identification list.

18. A system management framework as recited in claim 16, wherein the mobile computing device is configured to receive the download instructions from the management server in accordance with an XML schema.

19. A system management framework as recited in claim 16, wherein communications between the management server and the mobile computing device are performed using a secure sockets layer protocol for transmitting data securely over the World Wide Web.

20. A system management framework as recited in claim 16, wherein the mobile computing is further configured to present at least a portion of the offerings via a user interface, UI, the UI providing for user selection of an offering of the portion for subsequent delivery and configuration of the mobile client.

21. A system management framework as recited in claim 16:
wherein the mobile device is further configured to communicate a data discovery request comprising an indication of the last successful download operation; and
wherein the management server, responsive to receiving the data discovery request, is further configured to:
identify one or more files based on the indication;
update the offerings to indicate the one or more files; and
communicate the download instructions to the mobile computing device.

22. A system management framework as recited in claim 16, wherein the mobile computing device is further configured to perform operations comprising:
determining that the user has selected a particular offering of the offerings for delivery to the mobile device;
communicating a download request message to the management server to initiate the delivery; and
receiving the delivery comprising the particular offering from the management server.

23. A system management framework as recited in claim 16, wherein the mobile computing device is further configured to perform operations comprising:
determining that the user has selected a particular offering of the offerings for download;
scheduling download of the particular offering based on one or more user specked criteria:
responsive to occurrence of the one or more user specified criteria, communicating a download request message to a server to initiate download of the particular offering, the server being selected from the management server or a different server that is independent of the management server, and
receiving the particular offering from the server.

24. A system management framework as recited in claim 16, wherein the mobile computing device is further configured to perform operations comprising:
maintaining the offerings in a local cache for presentation to a user independent of a connection to the management server, and
removing information corresponding to an offering of the offerings from the local cache responsive to successful download and installation of the offering

25. A system management framework as recited in claim 16, wherein the mobile computing device is further configured to:
automatically determine if an available offering is required; and
responsive to identifying a required offering, automatically downloading and installing the required offering independent of user interaction.

26. A system management framework as recited in claim 16
wherein the mobile computing device, responsive to occurrence of a pre-configured event, is further configured to communicate a data discovery request to the management server, and
wherein the management server is further configured to communicate the download instructions to the mobile computing device responsive to receiving the data discovery request, the download instructions being selectively executable by the mobile computing device for requesting download of the offerings.

27. A system management framework as recited in claim 26, wherein the pre-configured event is a cold-boot of the remote computing device.

28. A system management framework as recited in claim 26, wherein the pre-configured event is scheduled by the user.

29. A system management framework as recited in claim 26, wherein the pre-configured event is designed to occur at a randomly selected time.

30. A system management framework as recited in claim 16, wherein the mobile computing device and management server are further configured to implement a multiple signature system to deliver a trusted application from an un-trusted server.

31. A system management framework as recited in claim 30, wherein the mobile computing device is configured to implement a portion of the multiple signature system by performing operations of:
maintaining a trusted source list;
authenticating received download instructions via information in the trusted source list; and .
responsive to successful verification of received download instructions, requesting and receiving one or more offerings from at least one location specified by the received download instructions.

32. A system management framework as recited in claim 30, wherein the mobile computing device is configured to implement a portion of the multiple signature system by performing operations of
maintaining a trusted source list;
authenticating received download instructions via information in the trusted source list;
responsive to successful verification of received download instructions, requesting and receiving one or more offerings from at least one location specified by the received download instructions: and
authenticating the one or more offerings via one or more security hash functions.

33. The system management framework of any one of claims 16 to 32, wherein the mobile computing device comprises a user interface, Ul, allowing the user to selectively configure the mobile device with one or more offerings of the intermittently connected management server, the Ul comprising:
a first Ul component allowing the user to send a data discovery request to the management server; and
a second area to indicate whether the management server has one or more offerings available to the mobile device since a last successful download operation by the mobile device from a URL associated with the management server, the second area comprising multiple user selectable components -allowing the user to view or ignore any available offerings.

34. A system management framework as recited in claim 33, wherein the UI further comprising a dialog box component responsive to user input for (a) scheduling a particular offering of the one or more offerings for download to the mobile device from the management server; and (b) viewing short or long descriptions of the particular offering.

35. A system management framework as recited in claim 33, wherein the UI further comprising a dialog box component responsive to user input for specifying one or more criteria to schedule download of a particular offering of the one or more offerings to the mobile device, the one or more criteria being based on any combination of one or more of connectivity attributes, time, and cost.

36. A user Interface, UI, enabling a user to selectively configure a mobile device (304) with one or more offerings from an Intermittently connected management server, the UI comprising:
a first UI component enabling the user to send a data discovery request (504) to the management server (302), the request indicating a time of last successful download from a URL hosted by the management server; and
a second UI component to indicate whether the management server has one or more offerings (410) available to the mobile device since a last successful download operation by the mobile device from a URL associated with the management server, the second UI
component comprising multiple user selectable portions allowing the user to view or ignore any available offerings.

37. A computer-readable medium comprising computer-program instructions executable by a computer for implementing the user Interface as recited in claim 36.

38. One or more computer-readable media containing instructions for a configuration management server (302) to deliver an application for remote configuration of a mobile device (304), the instructions being executable by said management server (302) to perform actions comprising:
receiving (508) a data discovery message from a mobile device (304), the data discovery message being received over a non-persistent connection between the configuration management server and the mobile device, the data discovery message indicating a time of last successful download; and
responsive to receiving the data discovery message indicating a time of last successful download from a URL hosted by the configuration management server (302), determining, by the configuration management server (302), that at least one offering has been deployed since the time of last successful download; and
communicating (512) download instructions (410) to the mobile device, the download instructions comprising information for the mobile device to determine the at least one offering, said determined at least one offering being used by said mobile device (304) to notify a user of said mobile device of the determined available files represented by said offerings.

39. One or more computer-readable media as recited in claim 38, wherein the at least one offering is associated with hardware and/or software attributes associated with the mobile device or an identify of a user of the device.

40. One or more computer-readable media as recited in claim 38, wherein the download instructions are based on an XML schema.

41. One or more computer-readable media as recited in claim 38, wherein communications between the computer and the mobile device are performed utilizing a secure network protocol.

42. One or more computer-readable media as recited in Claim 38, wherein the instructions are further executable by the computer to perform actions comprising:
receiving an application delivery request from the mobile device, the application delivery request indicating desired download of a package corresponding to at least a portion of the at least one offering; and
responsive to receiving the application delivery request, communicating the package to the mobile device.

43. A configuration management server comprising a processor and a memory comprising computer-program instructions, the computer-program instructions being designed to deliver an application to a requesting mobile device, the processor being configured to execute the instructions to perform actions as recited in claim 38.

## Patentansprüche

1. Verfahren zum Durchführen von Konfigurations-Management an einer Mobilvorrichtung (304), wobei das Verfahren durch die Mobilvorrichtung durchgeführt wird und das Verfahren umfasst:
Übertragen einer Anforderung (504) zu einem Server (302), wobei die Anforderung eine Zeit eines letzten erfolgreichen Download von einer URL anzeigt, die von dem Server gehostet wird;
in Reaktion auf das Übertragen der Anforderung, die die Zeit des letzten erfolgreichen Download anzeigt, Empfangen (514) eines Satzes von Download-Befehlen von dem Server, wobei die Download-Befehle auf Basis eines Schemas formatiert werden und einen Ort anzeigen, von dem ein oder mehrere Angebot/e (410) herunterzuladen ist/sind, wobei das eine oder die mehreren Angebot/e seit der Zeit des letzten erfolgreichen Download verfügbar gemacht worden sind;
Ermitteln des einen oder der mehreren Angebote/s aus den empfangenen Download-Befehlen;
Informieren (520) eines Benutzers der Mobilvorrichtung über die ermittelten verfügbaren Angebote;
Empfangen einer Auswahl-Anforderung (522) von dem Benutzer der Mobilvorrichtung, die eine gewünschte Aktion anzeigt, die wenigstens einem Angebot von dem einen oder den mehreren ermittelten Angebot/en entspricht; und
Durchführen der gewünschten Aktion auf Basis von Informationen, die durch die Download-Befehle bereitgestellt werden.

2. Verfahren nach Anspruch 1, wobei Übertragungen zwischen der Mobilvorrichtung und dem Server über ein sicheres Protokoll stattfinden.

3. Verfahren nach Anspruch 2, wobei das sichere Protokoll HTTPS ist.

4. Verfahren nach Anspruch 1, wobei Durchführen der gewünschten Aktion des Weiteren Präsentieren einer kurzen oder langen Beschreibung des wenigstens einen Angebotes für den Benutzer zur Begutachtung umfasst.

5. Verfahren nach Anspruch 1, das des Weiteren umfasst:
Exponieren einer Anwendungsprogrammierschnittstelle zum Hinzufügen oder Entfernen von Informationen zu/von einer Liste vertrauenswürdiger Quellen; und
Authentifizieren der Download-Befehle anhand einer Liste vertrauenswürdiger Quellen.

6. Verfahren nach Anspruch 1, das des Weiteren Exponieren einer Anwendungsprogrammierschnittstelle zum Definieren eines oder mehrer Ereignisse/s umfasst, die von der Mobilvorrichtung genutzt werden können, um Scheduling einer Datei zum Herunterladen durchzuführen, wobei die Datei durch die empfangenen Download-Befehle identifiziert wird.

7. Verfahren nach Anspruch 1, wobei Durchführen der gewünschten Aktion des Weiteren umfasst, dass angezeigt wird, dass der Benutzer nicht an dem wenigstens einen Angebot interessiert ist, indem das wenigstens eine Angebot aus einer lokal gecachten Angebotsliste entfernt wird.

8. Verfahren nach Anspruch 1, wobei Durchführen der gewünschten Aktion des Weiteren umfasst:
Übertragen einer Download-Anforderung zu dem Ort;
in Reaktion auf das Übertragen der Download-Anforderung Empfangen des wenigstens einen Angebotes durch die Mobilvorrichtung; und
Installieren des wenigstens einen Angebotes als eine oder mehrere Datei/en auf der Mobilvorrichtung.

9. Verfahren nach Anspruch 1, wobei Durchführen der gewünschten Aktion des Weiteren umfasst:
Scheduling eines Ereignisses auf Basis bestimmter Kriterien, wobei das Ereignis einer Übertragung einer Download-Anforderungsnachricht zu dem Ort entspricht;
in Reaktion auf das Auftreten des Ereignisses Übertragen der Download-Anforderungsnachricht zu dem Ort; und
in Reaktion auf das Übertragen der Download-Anforderungsnachricht Empfangen des wenigstens einen Angebotes durch die Mobilvorrichtung.

10. Verfahren nach Anspruch 9, wobei die speziellen Kriterien auf einer Benutzereingabe, Koordinierungsinformationen, die durch die Download-Befehle bereitgestellt werden, einem Hardware-Ereignis oder einem Software-Ereignis oder einer Kombination aus mehreren von ihnen basieren.

11. Verfahren nach Anspruch 1, das des Weiteren Empfangen vertrauenswürdiger Daten von einer nicht vertrauenswürdigen Server-Quelle durch Authentifizieren der Download-Befehle anhand einer Liste vertrauenswürdiger Quellen umfasst.

12. Verfahren nach Anspruch 11, wobei die Mobilvorrichtung eine Mobilvorrichtung ist, die nicht durch eine Firmen-Firewall geschützt wird.

13. Verfahren nach Anspruch 11, wobei weitere Vorgänge der Mobilvorrichtung umfassen:
in Reaktion auf ein Ermitteln von Authentizität der Download-Befehle Anfordern wenigstens eines Teils des einen oder der mehreren Angebote/s;
in Reaktion auf ein Anfordern des Teils Empfangen des Teils von dem Server;
Ermitteln von Authentizität des Teils über eine Hash-Funktion; und
in Reaktion auf ein Authentifizieren des Teils Installieren des Teils in einem Mobilvorrichtungs-Speicher.

14. Computerlesbares Medium, das Computerprogramm-Befehle zum Durchführen von Konfigurations-Management einer Mobilvorrichtung umfasst, wobei die Computerprogramm-Befehle von einem Computer ausgeführt werden können und dazu dienen, Vorgänge eines Verfahrens nach Anspruch 1 durchzuführen.

15. Mobilvorrichtung, die einen Prozessor umfasst, der mit einem Speicher verbunden ist, wobei der Speicher Computerprogramm-Befehle zum Durchführen von Konfigurations-Management einer Mobilvorrichtung umfasst und der Prozessor so konfiguriert ist, dass er die Computerprogramm-Befehle aus dem Speicher abruft und ausführt, um Vorgänge eines Verfahrens nach Anspruch 1 durchzuführen.

16. Systemmanagement-Rahmenwerk (300), das einen Management-Server (302) und eine Mobil-Computervorrichtung (304) umfasst, wobei
der Management-Server (302) so konfiguriert ist, dass er Download-Befehle zun Konfigurations-Management von Mobil-Computervorrichtungen (304) überträgt, wobei die Download-Befehle durch den Management-Server (302) in Reaktion auf ein Empfangen einer Anzeige einer Zeit eines letzten erfolgreichen Download von einer URL, die von dem Management-Server (302) gehostet wird, von der Mobil-Computervorrichtung (304) ermittelt werden; und
die Mobil-Computervorrichtung (304) so konfiguriert ist, dass sie mit dem Management-Server über eine nicht dauerhafte Verbindung in Verbindung treten kann, und die Mobil-Computervorrichtung des Weiteren so konfiguriert ist, dass sie die Download-Befehle (410) von dem Management-Server anfordern und empfangen kann; und die Mobil-Computervorrichtung (304) des Weiteren so konfiguriert ist, dass sie aus den empfangenen Download-Befehlen (410) einen Satz von Angeboten ermittelt, die zum Download und zur Installation durch die Mobil-Computervorrichtung verfügbar sind, wobei die Angebote die eine oder mehreren Datei/en darstellen;
die Mobil-Computervorrichtung (304) des Weiteren so konfiguriert ist, dass sie es einem Benutzer der Mobilvorrichtung gestattet, Download und Installation einer oder mehrerer Datei/en zu akzeptieren oder abzulehnen, die seit einem letzten durch die Mobil-Computervorrichtung durchgeführten erfolgreichen Download-Vorgang verfügbar sind; und
die Mobil-Computervorrichtung (304) des Weiteren so konfiguriert ist, dass sie dem Benutzer der Mobilvorrichtung alle ermittelten verfügbaren Angebote mitteilt; und
die Mobil-Computervorrichtung (304) des Weiteren so konfiguriert ist, dass sie den Download und die Installation auf Basis einer Benutzerauswahl in Reaktion auf die Mitteilung über die ermittelten verfügbaren Angebote annehmen oder ablehnen kann.

17. Systemmanagement-Rahmenwerk nach Anspruch 16, wobei die Download-Befehle zu der Mobil-Computervorrichtung als separate Nachrichten übertragen werden, eine erste Nachricht eine Paket-Identifizierungsliste umfasst und eine zweite Nachricht detaillierte Download-Befehle für ein oder mehrere Paket/e umfasst, das/die in der Paket-Identifizierungsliste angegeben ist/sind.

18. Systemmanagement-Rahmenwerk nach Anspruch 16, wobei die Mobil-Computervorrichtung so konfiguriert ist, dass sie die Download-Befehle von dem Management-Server entsprechend einem XML-Schema empfängt.

19. Systemmanagement-Rahmenwerk nach Anspruch 16, wobei Übertragungen zwischen dem Management-Server und der Mobil-Computervorrichtung unter Verwendung eines Secure-Socket-Layer-Protokolls zum sicheren Senden von Daten über das World Wide Web durchgeführt werden.

20. Systemmanagement-Rahmenwerk nach Anspruch 16, wobei die Mobil-Computervorrichtung des Weiteren so konfiguriert ist, dass sie wenigstens einen Teil der Angebote über eine Benutzerschnittstelle anzeigt, wobei die Benutzerschnittstelle Benutzerauswahl eines Angebotes des Teils zur anschließenden Lieferung und Konfiguration des Mobil-Client ermöglicht.

21. Systemmanagement-Rahmenwerk nach Anspruch 16,
wobei die Mobilvorrichtung des Weiteren so konfiguriert ist, dass sie eine Datenermittlungs-Anforderung überträgt, die eine Anzeige des letzten erfolgreichen Download-Vorgangs umfasst; und
wobei der Management-Server des Weiteren so konfiguriert ist, dass er in Reaktion auf Empfangen der Datenermittlungs-Anforderung
eine oder mehrere Datei/en auf Basis der Anzeige identifiziert;
die Angebote aktualisiert, um die eine oder die mehreren Datei/en anzuzeigen;
und
die Download-Befehle zu der Mobil-Computervorrichtung überträgt.

22. Systemmanagement-Rahmenwerk nach Anspruch 16, wobei die Mobil-Computervorrichtung des Weiteren so konfiguriert ist, dass sie Vorgänge durchführt, die umfassen:
Ermitteln, dass der Benutzer ein bestimmtes Angebot der Angebote zur Lieferung an die Mobilvorrichtung ausgewählt hat;
Übertragen einer Download-Anforderungsnachricht zu dem Management-Server, um die Lieferung einzuleiten; und
Empfangen der Lieferung, die das bestimmte Angebot umfasst, von dem Management-Server.

23. Systemmanagement-Rahmenwerk nach Anspruch 16, wobei die Mobil-Computervorrichtung des Weiteren so konfiguriert ist, dass sie Vorgänge durchführt, die umfassen:
Ermitteln, dass der Benutzer ein bestimmtes Angebot der Angebote zum Download ausgewählt hat;
Scheduling von Download des bestimmten Angebotes auf Basis eines oder mehrerer vom Benutzer angegebener Kriteriums/Kriterien;
in Reaktion auf das Auftreten des/der von dem Benutzer angegebenen einen/mehreren Kriteriums/Kriterien Übertragen einer Download-Anforderungsnachricht zu einem Server, um Download des bestimmten Angebots einzuleiten, wobei der Server aus dem Management-Server oder einem anderen Server ausgewählt wird, der unabhängig von dem Management-Server ist; und
Empfangen des bestimmten Angebots von dem Server.

24. Systemmanagement-Rahmenwerk nach Anspruch 16, wobei die Mobil-Computervorrichtung des Weiteren so konfiguriert ist, dass sie Vorgänge durchführt, die umfassen:
Speichern der Angebote in einem lokalen Cache zur Anzeige an einen Benutzer unabhängig von einer Verbindung zu dem Management-Server; und
Entfernen von Informationen, die einem Angebot der Angebote entsprechen, aus dem lokalen Cache in Reaktion auf erfolgreichen Download und Installation des Angebotes.

25. Systemmanagement-Rahmenwerk nach Anspruch 16, wobei die Mobil-Computervorrichtung des Weiteren so konfiguriert ist, dass sie
automatisch ermittelt, ob ein verfügbares Angebot erforderlich ist; und
in Reaktion auf Identifizieren eines erforderlichen Angebotes das erforderliche Angebot unabhängig von Benutzereingriff automatisch herunterlädt und installiert.

26. Systemmanagement-Rahmenwerk nach Anspruch 16,
wobei die Mobil-Computervorrichtung des Weiteren so konfiguriert ist, dass sie in Reaktion auf das Auftreten eines vorkonfigurierten Ereignisses eine Datenermittlungs-Anforderung zu dem Management-Server überträgt; und
wobei der Management-Server des Weiteren so konfiguriert ist, dass er in Reaktion auf Empfang der Datenermittlungs-Anforderung die Download-Befehle zu der Mobil-Computervorrichtung überträgt, wobei die Download-Befehle selektiv durch die Mobil-Computervorrichtung ausgeführt werden können, um Download der Angebote anzufordern.

27. Systemmanagement-Rahmenwerk nach Anspruch 26, wobei das vorkonfigurierte Ereignis ein Kaltstart (cold-boot) der entfernten Computervorrichtung ist.

28. Systemmanagement-Rahmenwerk nach Anspruch 26, wobei Scheduling des vorkonfigurierten Ereignisses von dem Benutzer durchgeführt wird.

29. Systemmanagement-Rahmenwerk nach Anspruch 26, wobei vorgesehen ist, dass das vorkonfigurierte Ereignis zu einer beliebig ausgewählten Zeit auftritt.

30. Systemmanagement-Rahmenwerk nach Anspruch 16, wobei die Mobil-Computervorrichtung und der Management-Server des Weiteren so konfiguriert sind, dass sie ein Mehrfachsignatur-System zur Lieferung einer vertrauenswürdigen Anwendung von einem nichtvertrauenswürdigen Server implementieren.

31. Systemmanagement-Rahmenwerk nach Anspruch 30, wobei die Mobil-Computervorrichtung so konfiguriert ist, dass sie einen Teil des Mehrfachsignatur-Systems implementiert, indem sie die folgenden Vorgänge durchführt:
Speichern einer Liste vertrauenswürdiger Quellen;
Authentifizieren empfangener Download-Befehle über Informationen in der Liste vertrauenswürdiger Quellen; und
in Reaktion auf erfolgreiche Verifizierung empfangener Download-Befehle Anfordern und Empfangen eines oder mehrerer Angebote/s von wenigstens einem Ort, der durch die empfangenen Download-Befehle angegeben wird.

32. Systemmanagement-Rahmenwerk nach Anspruch 30, wobei die Mobil-Computervorrichtung so konfiguriert ist, dass sie einen Teil des Mehrfachsignatur-Systems implementiert, indem sie die folgenden Vorgänge durchführt:
Speichern einer Liste vertrauenswürdiger Quellen;
Authentifizieren empfangener Download-Befehle über Informationen in der Liste vertrauenswürdiger Quellen;
in Reaktion auf erfolgreiche Verifizierung der empfangenen Download-Befehle Anfordern und Empfangen eines oder mehrerer Angebote/s von wenigstens einem Ort, der durch die empfangenen Download-Befehle angegeben wird; und
Authentifizieren des einen oder der mehreren Angebote/s über eine oder mehrere Sicherheits-Hash-Funktion/en.

33. Systemmanagement-Rahmenwerk nach einem der Ansprüche 16 bis 32, wobei die Mobil-Computervorrichtung eine Benutzerschnittstelle umfasst, die es dem Benutzer erlaubt, die Mobilvorrichtung selektiv mit einem oder mehreren Angebot/en des zeitweise verbundenen Management-Servers zu konfigurieren, wobei die Benutzerschnittstelle umfasst:
eine erste Benutzerschnittstellen-Komponente, die es dem Benutzer erlaubt, eine Datenermittlungs-Anforderung zu dem Management-Server zu senden; und
einen zweiten Bereich, der anzeigt, ob der Management-Server über ein oder mehrere Angebot/e verfügt, die für die Mobilvorrichtung seit einem letzten erfolgreichen Download-Vorgang durch die Mobilvorrichtung von einer URL verfügbar sind, die mit dem Management-Server verknüpft ist, wobei der zweite Bereich mehrere durch Benutzer auswählbare Komponenten umfasst, die es dem Benutzer erlauben, alle verfügbaren Angebote zu betrachten oder zu ignorieren.

34. Systemmanagement-Rahmenwerk nach Anspruch 33, wobei die Benutzerschnittstelle des Weiteren eine Dialogbox-Komponente umfasst, die auf Benutzereingabe zum a) Scheduling eines speziellen Angebotes des einen oder der mehreren Angebote/s zum Download auf die Mobilvorrichtung von dem Management-Server und b) Betrachten kurzer oder langer Beschreibungen des speziellen Angebotes anspricht.

35. Systemmanagement-Rahmenwerk nach Anspruch 33, wobei die Benutzerschnittstelle des Weiteren eine Dialogbox-Komponente umfasst, die auf Benutzereingabe zum Angeben eines oder mehrerer Kriteriums/Kriterien zum Scheduling von Download eines speziellen Angebotes des einen oder der mehreren Angebote/s auf die Mobilvorrichtung anspricht, wobei das eine Kriterium bzw. die mehreren Kriterien auf Konnektivitäts-Attributen, Zeit und Kosten oder einer Kombination aus mehreren von ihnen basiert/basieren.

36. Benutzerschnittstelle, die es einem Benutzer ermöglicht, selektiv eine Mobilvorrichtung (304) mit einem oder mehreren Angebot/en von einem zeitweise verbundenen Management-Server zu konfigurieren, wobei die Benutzerschnittstelle umfasst:
eine erste Benutzerschnittstellen-Komponente, die den Benutzer befähigt, eine Datenermittlungs-Anforderung (504) zu dem Management-Server (302) zu senden, wobei die Anforderung eine Zeit eines letzten erfolgreichen Download von einer URL anzeigt, die von dem Management-Server gehostet wird; und
eine zweite Benutzerschnittstellen-Komponente, die anzeigt, ob der Management-Server über ein oder mehrere Angebot/e (410) verfügt, die für die Mobilvorrichtung seit einem letzten erfolgreichen Download-Vorgang durch die Mobilvorrichtung von einer mit dem Management-Server verknüpften URL verfügbar ist/sind, wobei die zweite Benutzerschnittstellen-Komponente mehrere durch Benutzer auswählbare Teile umfasst, die es dem Benutzer ermöglichen, alle verfügbaren Angebote zu betrachten oder zu ignorieren.

37. Computerlesbares Medium, das Computerprogramm-Befehle umfasst, die von einem Computer zum Implementieren der Benutzerschnittstelle nach Anspruch 36 ausgeführt werden können.

38. Ein computerlesbares Medium oder mehrere computerlesbare Medien, das/die Befehle für einen Konfigurationsmanagement-Server (203) zum Bereitstellen einer Anwendung zum Femkonfigurieren einer Mobilvorrichtung (304) enthält/enthalten, wobei die Befehle durch den Management-Server (302) ausgeführt werden können, um Vorgänge durchzuführen, die umfassen:
Empfangen (508) einer Datenermittlungs-Nachricht von einer Mobilvorrichtung (304), wobei die Datenermittlungs-Nachricht über eine nicht dauerhafte Verbindung zwischen dem Konfigurationsmanagement-Server und der Mobilvorrichtung empfangen wird und die Datenermittlungs-Nachricht eine Zeit eines letzten erfolgreichen Download anzeigt; und
in Reaktion auf Empfangen der Datenermittlungs-Nachricht Anzeigen einer Zeit eines letzten erfolgreichen Download von einer URL, die von dem Konfigurationsmanagement-Server (302) gehostet wird, Ermitteln, dass wenigstens ein Angebot seit der Zeit des letzten erfolgreichen Download durch den Konfigurationsmanagement-Server (302) bereitgestellt worden ist; und
Übertragen (512) von Download-Befehlen (410) zu der Mobilvorrichtung, wobei die Download-Befehle Informationen für die Mobilvorrichtung zum Ermitteln des wenigstens einen Angebotes umfassen und das ermittelte wenigstens eine Angebot durch die Mobilvorrichtung (304) genutzt wird, um einen Benutzer der Mobilvorrichtung über die ermittelten verfügbaren Dateien zu informieren, die durch die Angebote dargestellt werden.

39. Ein computerlesbares Medium oder mehrere computerlesbare Medien nach Anspruch 38, wobei das wenigstens eine Angebot mit Hardware- und/oder Software-Attributen verknüpft ist, die mit der Mobilvorrichtung oder einer Identität eines Benutzers der Vorrichtung verknüpft sind.

40. Ein computerlesbares Medium oder mehrere computerlesbare Medien nach Anspruch 38, wobei die Download-Befehle auf einem XML-Schema basieren.

41. Ein computerlesbares Medium oder mehrere computerlesbare Medien nach Anspruch 38, wobei Übertragungen zwischen dem Computer und der Mobilvorrichtung unter Verwendung eines sicheren Netzwerkprotokolls durchgeführt werden.

42. Ein computerlesbares Medium oder mehrere computerlesbare Medien nach Anspruch 38, wobei die Befehle des Weiteren durch den Computer ausgeführt werden können, um Vorgänge durchzuführen, die umfassen:
Empfangen einer Anwendungs-Lieferungsanforderung von der Mobilvorrichtung, wobei die Anwendungs-Lieferungsanforderung gewünschten Download eines Paketes anzeigt, das wenigstens einem Teil des wenigstens einen Angebots entspricht; und in Reaktion auf Empfangen der Anwendungs-Lieferungsanforderung Übertragen des Paketes zu der Mobilvorrichtung.

43. Konfigurationsmanagement-Server, der einen Prozessor und einen Speicher umfasst, der Computerprogramm-Befehle umfasst, wobei die Computerprogramm-Befehle dazu dienen, einer anfordernden Mobilvorrichtung eine Anwendung zu liefern, und der Prozessor so konfiguriert ist, dass er die Befehle zum Durchführen von Vorgängen nach Anspruch 38 ausführt.

## Revendications

1. Procédé permettant la mise en oeuvre d'une gestion de configuration sur un dispositif mobile (304), le procédé étant mis en oeuvre par ledit dispositif mobile, le procédé comprenant les étapes consistant à :
communiquer une demande (504) à un serveur (302), la demande indiquant une heure d'un dernier téléchargement réussi auprès d'une adresse URL hébergée par le serveur ;
en réponse à la communication de la demande qui indique l'heure du dernier téléchargement réussi, recevoir (514) un ensemble d'instructions de téléchargement du serveur, les instructions de téléchargement étant formatées en se basant sur un schéma et indiquant un emplacement auprès duquel il y a lieu de télécharger une ou plusieurs offres (410), lesdites offres ayant été mises à disposition depuis l'heure du dernier téléchargement réussi ;
déterminer lesdites offres à partir des instructions de téléchargement reçues ;
notifier (520) un utilisateur du dispositif mobile des offres disponibles déterminées ;
recevoir une demande de sélection (522) de l'utilisateur du dispositif mobile, indiquant une action souhaitée correspondant à au moins une offre parmi lesdites offres déterminées ; et
mettre en oeuvre l'action souhaitée en se basant sur des informations indiquées par les instructions de téléchargement.

2. Procédé selon la revendication 1, dans lequel les communications entre le dispositif mobile et le serveur s'effectuent via un protocole sécurisé.

3. Procédé selon la revendication 2, dans lequel le protocole sécurisé est le protocole HTTPS.

4. Procédé selon la revendication 1, dans lequel la mise en oeuvre de l'action souhaitée comporte en outre la présentation d'une description courte ou longue de ladite offre à l'utilisateur pour examen.

5. Procédé selon la revendication 1, comportant en outre les étapes consistant à :
exposer une interface de programmation d'application pour ajouter ou supprimer des informations dans une liste de sources accréditées ; et
authentifier les instructions de téléchargement vis-à-vis d'une liste de sources accréditées.

6. Procédé selon la revendication 1, comportant en outre l'étape consistant à exposer une interface de programmation d'application pour définir un ou plusieurs événements utilisables par le dispositif mobile pour programmer un téléchargement de fichier, le fichier étant identifié par les instructions de téléchargement reçues.

7. Procédé selon la revendication 1, dans lequel la mise en oeuvre de l'action souhaitée comporte en outre l'étape consistant à indiquer que l'utilisateur n'est pas intéressé par ladite offre en éliminant ladite offre d'une liste d'offres mise en mémoire cache localement.

8. Procédé selon la revendication 1, dans lequel la mise en oeuvre de l'action souhaitée comporte en outre les étapes consistant à :
communiquer une demande de téléchargement à l'emplacement ;
en réponse à la communication de la demande de téléchargement, recevoir ladite offre sur le dispositif mobile ; et
installer ladite offre sous la forme d'un ou plusieurs fichiers sur le dispositif mobile.

9. Procédé selon la revendication 1, dans lequel la mise en oeuvre de l'action souhaitée comporte en outre les étapes consistant à :
programmer un événement en se basant sur des critères particuliers, l'événement correspondant à la communication d'un message de demande de téléchargement à l'emplacement ;
en réponse à l'apparition de l'événement, communiquer le message de demande de téléchargement à l'emplacement ; et
en réponse à la communication du message de demande de téléchargement, recevoir ladite offre sur le dispositif mobile.

10. Procédé selon la revendication 9, dans lequel les critères particuliers sont basés sur une combinaison quelconque d'une ou plusieurs entrées utilisateur, d'informations de programmation indiquées par les instructions de téléchargement, d'un événement matériel et d'un événement logiciel.

11. Procédé selon la revendication 1, comportant en outre l'étape consistant à recevoir des données accréditées provenant d'une source de serveur non accréditée en authentifiant les instructions de téléchargement par rapport à une liste de sources accréditées.

12. Procédé selon la revendication 11, dans lequel le dispositif mobile est un dispositif mobile non protégé par un pare-feu d'entreprise.

13. Procédé selon la revendication 11, dans lequel d'autres opérations du dispositif mobile comportent les étapes consistant à :
en réponse à la détermination de l'authenticité des instructions de téléchargement, demander au moins une partie desdites offres ;
en réponse à la demande de la partie, recevoir la partie du serveur ;
déterminer l'authenticité de la partie par une fonction de hachage ; et
en réponse à l'authentification de la partie, installer la partie dans la mémoire du dispositif mobile.

14. Support lisible par ordinateur comportant des instructions de programme informatique permettant de mettre en oeuvre une gestion de configuration d'un dispositif mobile, les instructions de programme informatique étant exécutables par un ordinateur et permettant de réaliser les opérations d'un procédé selon la revendication 1.

15. Dispositif mobile comportant un processeur couplé à une mémoire, la mémoire comportant des instructions de programme informatique permettant de mettre en oeuvre une gestion de configuration d'un dispositif mobile, le processeur étant configuré pour extraire et exécuter les instructions de programme informatique à partir de la mémoire pour mettre en oeuvre des opérations d'un procédé selon la revendication 1.

16. Structure de gestion système (300) comportant un serveur de gestion (302) et un dispositif informatique mobile (304), dans lequel :
le serveur de gestion (302) est configuré pour communiquer des instructions de téléchargement à des fins de gestion de configuration de dispositifs informatiques mobiles (304) ; dans laquelle lesdites instructions de téléchargement sont déterminées par le serveur de gestion (302) en réponse à la réception, à partir du dispositif informatique mobile (304), d'une indication d'une heure d'un dernier téléchargement réussi auprès d'une adresse URL hébergée par le serveur de gestion (302) ; et
le dispositif informatique mobile (304) est configuré pour se connecter au serveur de gestion au moyen d'une connexion non permanente, le dispositif informatique mobile étant en outre configuré pour demander et recevoir les instructions de téléchargement (410) auprès du serveur de gestion ; et
le dispositif informatique mobile (304) étant en outre configuré pour déterminer, à partir des instructions de téléchargement reçues (410), un ensemble d'offres disponibles pour téléchargement et installation par le dispositif informatique mobile, les offres représentant lesdits fichiers ;
le dispositif informatique mobile (304) étant en outre configuré pour permettre à un utilisateur du dispositif mobile d'accepter ou de refuser le téléchargement et l'installation de l'un quelconque desdits fichiers disponibles depuis une dernière opération de téléchargement réussie effectuée par le dispositif informatique mobile ; et
ledit dispositif informatique mobile (304) étant en outre configuré pour notifier ledit utilisateur du dispositif mobile d'une quelconque des offres disponibles déterminées ; et
ledit dispositif informatique mobile (304) étant en outre configuré pour accepter ou refuser lesdits téléchargement et installation en se basant sur une sélection d'un utilisateur en réponse à la notification desdites offres disponibles déterminées.

17. Structure de gestion système selon la revendication 16, dans laquelle les instructions de téléchargement sont communiquées au dispositif informatique mobile sous la forme de messages distincts, un premier message comportant une première liste d'identification d'ensembles de logiciels et un second message comportant des instructions de téléchargement détaillées pour un ou plusieurs ensembles de logiciels spécifiés dans la liste d'identification d'ensemble de logiciels.

18. Structure de gestion système selon la revendication 16, dans laquelle le dispositif informatique mobile est configuré pour recevoir les instructions de téléchargement du serveur de gestion conformément à un schéma XML.

19. Structure de gestion système selon la revendication 16, dans laquelle les communications entre le serveur de gestion et le dispositif informatique mobile sont effectuées en utilisant un protocole SSL (Secure Sockets Layer) pour transmettre de manière sécurisée des données sur le World Wide Web.

20. Structure de gestion système selon la revendication 16, dans laquelle le dispositif informatique mobile est en outre configuré pour présenter au moins une partie des offres via une interface utilisateur (UI), l'interface utilisateur permettant la sélection par l'utilisateur d'une offre de la partie pour les opérations consécutives d'acheminement et de configuration du client mobile.

21. Structure de gestion système selon la revendication 16 :
dans laquelle le dispositif mobile est en outre configuré pour communiquer une demande d'identification de données comportant une indication de la dernière opération de téléchargement réussie ; et
dans laquelle le serveur de gestion, en réponse à la réception de la demande d'identification de données, est en outre configuré pour :
identifier un ou plusieurs fichiers en se basant sur l'indication ;
mettre à jour les offres pour indiquer lesdits fichiers ; et
communiquer les instructions de téléchargement au dispositif informatique mobile.

22. Structure de gestion système selon la revendication 16, dans laquelle le dispositif informatique mobile est en outre configuré pour mettre en oeuvre les opérations comportant les étapes consistant à :
déterminer que l'utilisateur a sélectionné une offre particulière parmi les offres pour l'acheminer vers le dispositif mobile ;
communiquer un message de demande de téléchargement au serveur de gestion pour déclencher l'acheminement ; et
recevoir l'acheminement comportant l'offre particulière du serveur de gestion.

23. Structure de gestion système selon la revendication 16, dans laquelle le dispositif informatique mobile est en outre configuré pour mettre en oeuvre les opérations consistant à :
déterminer que l'utilisateur a sélectionné une offre particulière des offres à télécharger ;
programmer le téléchargement de l'offre particulière en se basant sur un ou plusieurs critères spécifiés par l'utilisateur ;
en réaction à l'existence desdits critères spécifiés par l'utilisateur, communiquer un message de demande de téléchargement à un serveur pour déclencher le téléchargement de l'offre particulière, le serveur étant sélectionné auprès du serveur de gestion ou d'un serveur différent, indépendant du serveur de gestion ; et
recevoir l'offre particulière du serveur.

24. Structure de gestion système selon la revendication 16, dans laquelle le dispositif informatique mobile est en outre configuré pour procéder aux opérations consistant à :
conserver les offres dans une mémoire cache locale pour présentation à un utilisateur indépendant d'une connexion sur le serveur de gestion ; et
supprimer des informations correspondant à une offre parmi les offres figurant dans la mémoire cache locale en réponse au téléchargement et à l'installation réussis de l'offre.

25. Structure de gestion système selon la revendication 16, dans laquelle le dispositif informatique mobile est en outre configuré pour :
déterminer automatiquement si une offre disponible est requise ; et
en réponse à l'identification d'une offre requise, télécharger et installer automatiquement l'offre requise indépendante d'une interaction avec l'utilisateur.

26. Structure de gestion système selon la revendication 16 :
dans laquelle le dispositif informatique mobile, en réaction à l'apparition d'un événement préconfiguré, est en outre configuré pour communiquer une demande d'identification de données au serveur de gestion ; et
dans laquelle le serveur de gestion est en outre configuré pour communiquer les instructions de téléchargement au dispositif informatique mobile en réponse à la réception de la demande d'identification de données, les instructions de téléchargement étant sélectivement exécutables par le dispositif informatique mobile pour demander le téléchargement des offres.

27. Structure de gestion système selon la revendication 26, dans laquelle l'événement préconfiguré est un amorçage à froid du dispositif informatique distant.

28. Structure de gestion système selon la revendication 26, dans laquelle l'événement préconfiguré est programmé par l'utilisateur.

29. Structure de gestion système selon la revendication 26, dans laquelle l'événement préconfiguré est conçu pour se produire à une heure sélectionnée aléatoirement.

30. Structure de gestion système selon la revendication 16, dans laquelle le dispositif informatique mobile et le serveur de gestion sont en outre configurés pour mettre en oeuvre un système à signatures multiples pour produire une application accréditée à partir d'un serveur non accrédité.

31. Structure de gestion système selon la revendication 30, dans laquelle le dispositif informatique mobile est configuré pour mettre en oeuvre une partie du système à signatures multiples en mettant en oeuvre les opérations consistant à :
conserver une liste de sources accréditées ;
authentifier des instructions de téléchargement reçues via des informations dans la liste des sources accréditées ; et
en réponse à la vérification réussie d'instructions de téléchargement reçues, demander et recevoir une ou plusieurs offres auprès d'au moins un emplacement spécifié par les instructions de téléchargement reçues.

32. Structure de gestion système selon la revendication 30, dans laquelle le dispositif informatique mobile est configuré pour mettre en oeuvre une partie du système à signatures multiples en mettant en oeuvre les opérations consistant à :
conserver une liste de sources accréditées ;
authentifier des instructions de téléchargement reçues via des informations dans la liste de sources accréditées ;
en réponse à la vérification réussie des instructions de téléchargement reçues, demander et recevoir une ou plusieurs offres auprès d'au moins un emplacement spécifié par les instructions de téléchargement reçues ; et
authentifier lesdites offres via une ou plusieurs fonctions de hachage de sécurité.

33. Structure de gestion système selon l'une quelconque des revendications 16 à 32, dans laquelle le dispositif informatique mobile comporte une interface utilisateur (UI), qui permet à l'utilisateur de configurer sélectivement le dispositif mobile avec une ou plusieurs offres du serveur de gestion connecté de manière intermittente, l'interface utilisateur comportant :
un premier composant d'interface utilisateur permettant à l'utilisateur d'envoyer une demande d'identification de données au serveur de gestion ; et
une seconde zone permettant d'indiquer si le serveur de gestion comporte une ou plusieurs offres disponibles pour le dispositif mobile depuis une dernière opération de téléchargement réussie par le dispositif mobile auprès d'une adresse URL associée au serveur de gestion, la seconde zone comportant plusieurs composants sélectionnables par l'utilisateur, permettant à l'utilisateur de visualiser ou d'ignorer des offres éventuelles disponibles.

34. Structure de gestion système selon la revendication 33, dans laquelle l'interface utilisateur comporte en outre un composant de boîte de dialogue qui réagit à une entrée d'un utilisateur pour (a) programmer une offre particulière desdites offres pour un téléchargement sur le dispositif mobile à partir du serveur de gestion ; et (b) visualiser des descriptions courtes ou longues de l'offre particulière.

35. Structure de gestion système selon la revendication 33, dans laquelle l'interface utilisateur comporte en outre un composant de boîte de dialogue réactif à une entrée d'un utilisateur pour spécifier un ou plusieurs critères permettant de programmer le téléchargement d'une offre particulière desdites offres sur le dispositif mobile, lesdits critères étant basés sur une combinaison quelconque d'un ou plusieurs attributs de connectivité, du temps et d'un coût.

36. Interface utilisateur (UI), permettant à un utilisateur de configurer sélectivement un dispositif mobile (304) avec une ou plusieurs offres à partir d'un serveur de gestion connecté de manière intermittente, l'interface utilisateur comportant :
un premier composant d'interface utilisateur permettant à l'utilisateur d'envoyer une demande d'identification de données (504) au serveur de gestion (302), la demande indiquant une heure du dernier téléchargement réussi auprès d'une adresse URL hébergée par le serveur de gestion ; et
un second composant d'interface utilisateur destiné à indiquer si le serveur de gestion dispose d'une ou plusieurs offres (410) disponibles pour le dispositif mobile depuis une dernière opération de téléchargement réussie par le dispositif mobile auprès d'une adresse URL associée au serveur de gestion, le second composant d'interface utilisateur comportant plusieurs parties sélectionnables par un utilisateur, permettant l'utilisateur de visualiser ou d'ignorer des offres éventuelles disponibles.

37. Support lisible par ordinateur comportant des instructions de programme informatique, exécutables par un ordinateur, pour mettre en oeuvre l'interface utilisateur selon la revendication 36.

38. Support ou supports lisibles par ordinateur contenant des instructions pour un serveur de gestion de configuration (302) permettant de produire une application pour une configuration à distance d'un dispositif mobile (304), les instructions étant exécutables par ledit serveur de gestion (302) pour mettre en oeuvre les actions consistant à :
recevoir (508) un message d'identification de données d'un dispositif mobile (304), le message d'identification de données étant reçu sur une connexion non permanente entre le serveur de gestion de configuration et le dispositif mobile, le message d'identification de données indiquant une heure d'un dernier téléchargement réussi ; et
en réponse à la réception du message d'identification de données, indiquer une heure d'un dernier téléchargement réussi auprès d'une adresse URL hébergée par le serveur de gestion de configuration (302), déterminer grâce au serveur de gestion de configuration (302), qu'au moins une offre a été déployée depuis l'heure du dernier téléchargement réussi ; et
communiquer (512) des instructions de téléchargement (410) au dispositif mobile, les instructions de téléchargement comportant des informations destinées au dispositif mobile permettant de déterminer ladite offre, ladite offre déterminée étant utilisée par ledit dispositif (304) pour notifier à un utilisateur dudit dispositif mobile les fichiers disponibles déterminés représentés par lesdites offres.

39. Support ou supports lisibles par ordinateur selon la revendication 38, dans lesquels ladite offre est associée à des attributs matériels et/ou logiciels associés au dispositif mobile ou à une identification d'un utilisateur du dispositif.

40. Support ou supports lisibles par ordinateur selon la revendication 38, dans lesquels les instructions de téléchargement sont basées sur un schéma XML.

41. Support ou supports lisibles par ordinateur selon la revendication 38, dans lesquels les communications entre l'ordinateur et le dispositif mobile sont effectuées en utilisant un protocole de réseau sécurisé.

42. Support ou supports lisibles par ordinateur selon la revendication 38, dans lesquels les instructions sont en outre exécutables par l'ordinateur pour mettre en oeuvre les actions consistant à :
recevoir une demande d'acheminement d'application provenant du dispositif mobile, la demande d'acheminement d'application indiquant le téléchargement souhaité d'un ensemble de logiciels correspondant à ladite partie de ladite offre ; et
en réponse à la réception de la demande d'acheminement d'application, communiquer l'ensemble de logiciels au dispositif mobile.

43. Serveur de gestion de configuration comportant un processeur et une mémoire comportant des instructions de programme informatique, les instructions de programme informatique étant conçues pour acheminer une application auprès d'un dispositif mobile demandeur, le processeur étant configuré pour exécuter les instructions afin de mettre en oeuvre les actions selon la revendication 38.
